# EUROPEAN PATENT APPLICATION

(11) **EP 4 700 051 A1**
(43) Date of publication of application: **25.02.2026**
(21) Application number: 23935006.9
(22) Date of filing: 10.11.2023
(51) Int. Cl.: C08F 130/02, C08F 130/00, H01M 10/056, H01M 10/0564, H01M 10/0566, H01M 10/0567, C07F 9/6574

(54) **POLYMER AND PREPARATION METHOD THEREFOR, GEL POLYMER ELECTROLYTE, BATTERY, AND ELECTRICAL DEVICE**

(30) Priority: 26.04.2023 CN 202310465621
(71) Applicant: Contemporary Amperex Technology Co., Limited, Ningde, Fujian 352100 (CN)
(72) Inventor: WAN, Pan, Ningde, Fujian 352100 (CN); LIU, Chengyong, Ningde, Fujian 352100 (CN); WANG, Hansen, Ningde, Fujian 352100 (CN); ZHANG, Rupeng, Ningde, Fujian 352100 (CN); HUANG, Shengyuan, Ningde, Fujian 352100 (CN)
(74) Representative: Ziebig Hengelhaupt Intellectual Property Attorneys Patentanwaltskanzlei PartGmbB
(86) International application number: PCT/CN2023/131064
(87) International publication number: WO 2024/221838

(57) **Abstract**

The present application discloses a polymer and a preparation method therefor, a gel polymer electrolyte, a battery, and an electrical device. A general formula of the polymer is shown in formula (I), 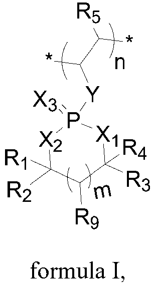 wherein m includes 0 and/or 1; n is a positive integer; X₁ and X₂ each independently include oxygen, sulfur or imino; X₃ includes any one of oxygen or sulfur; Y includes oxygen, sulfur, imino, -S-C₁₋₈ alkylene unsubstituted or substituted with any group, -NH-C₁₋₈ alkylene unsubstituted or substituted with any group, C₁₋₈ alkylene unsubstituted or substituted with any group, and C₁₋₈ alkoxylene unsubstituted or substituted with any group; R₁, R₂, R₃, and R₄ each independently include any one of hydrogen, fluorine, C₁₋₁₀ alkyl unsubstituted or substituted with any group, and C₁₋₁₀ alkoxyl unsubstituted or substituted with any group; R₅ includes any one of C₁₋₁₀ alkyl unsubstituted or substituted with any group and formula (A) 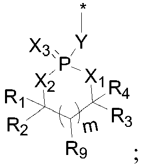 and R₉ includes C₁₋₁₀ alkyl unsubstituted or substituted with any group.

## Description

### TECHNICAL FIELD

The present application relates to the field of batteries, and in particular, to a polymer and a preparation method therefor, a gel polymer electrolyte, a battery, and an electrical device.

### BACKGROUND

Lithium ion batteries which feature greenness, environmental-friendliness, high energy, low carbon, and the like are used not only in energy storage power systems such as hydropower, thermal power, wind power, and solar power plants, but also in electric tools such as electric bicycles, electric motorcycles, and electric vehicles, as well as military equipment, aerospace, and many other fields. With the development of the current society, the demand for the lithium ion batteries is increasingly high.

### SUMMARY

In view of the technical problems in the background art, the present application provides a polymer, which aims to improve the thermal stability of a battery and reduce the probability of thermal runaway.

In order to achieve the above objective, a first aspect of the present application provides a polymer, having a general formula shown in formula I: 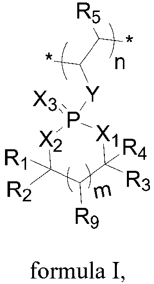
where m includes 0 and/or 1; n is a positive integer; X₁ and X₂ each independently include oxygen, sulfur or imino; X₃ includes oxygen or sulfur;
Y includes any one of oxygen, sulfur, imino, -S-C₁₋₈ alkylene unsubstituted or substituted with any group, -NH-C₁₋₈ alkylene unsubstituted or substituted with any group, C₁₋₈ alkylene unsubstituted or substituted with any group, and C₁₋₈ alkoxylene unsubstituted or substituted with any group; R₁, R₂, R₃, and R₄ each independently include any one of hydrogen, fluorine, C₁₋₁₀ alkyl unsubstituted or substituted with any group, and C₁₋₁₀ alkoxyl unsubstituted or substituted with any group; R₅ includes any one of C₁₋₁₀ alkyl unsubstituted or substituted with any group and 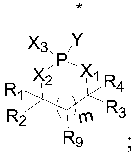 and R₉ includes C₁₋₁₀ alkyl unsubstituted or substituted with any group; and the any group includes at least one of halogen, alkyl, alkoxyl, an ester group, and carbonyl.

Compared with the prior art, the polymer in the first aspect of the present application may have the following beneficial effects: the polymer has a flame retardant property, and when it is used in a battery (for example, a polymerized monomer including a cyclic phosphate compound having a double bond may be introduced into an electrolytic solution and polymerized under the action of an initiator to obtain a polymer network); on the one hand, the polymer may be subjected to ring opening polymerization in the case of abuse such as high temperature or overcharge of the battery to gelate the electrolytic solution, which increases the internal resistance of the battery and decreases the probability of thermal runaway of the battery, and on the other hand, a substituent group of the polymer may be used to further satisfy an intended effect, for example, halogen substitution may be used to improve a flame retardant effect or reduce a side reaction of the battery. In summary, the introduction of the polymer into the battery contributes to improving the thermal stability of the battery, reducing the probability of combustion and thermal runaway of the battery.

A second aspect of the present application provides a method for preparing the polymer according to the first aspect of the present application, including self-polymerizing a cyclic phosphate compound having a double bond; and/or copolymerizing the cyclic phosphate compound having a double bond with a second polymerizable compound. Compared with the prior art, this method may not only obtain a polymer having a cyclic phosphate structure, but also satisfy different additional requirements by selecting specific types or structures of the polymerized monomer and/or the second polymerizable compound according to actual requirements, and may be used in the field of batteries to improve the thermal stability of the batteries, and reduce the probability of combustion and thermal runaway of the battery.

A third aspect of the present application provides a gel polymer electrolyte, including a polymer matrix and an electrolytic solution, where the polymer matrix includes the polymer according to the first aspect of the present application or the polymer obtained by using the method according to the second aspect of the present application.

A fourth aspect of the present application provides a battery, including the gel polymer electrolyte according to the third aspect of the present application, and/or the polymer obtained by using the method according to the second aspect of the present application, and/or the polymer according to the first aspect of the present application.

According to a fifth aspect, the present application provides an electrical device, including the battery according to the fourth aspect of the present application.

Additional aspects and advantages of the present application will be partly provided in the following description, and partly become evident in the following description or understood through the practice of the present application.

### DESCRIPTION OF DRAWINGS

The above and/or additional aspects and advantages of the present application will become apparent and more readily appreciated from the following description of the embodiments taken in conjunction with the accompanying drawings, in which:
FIG. 1 is a schematic structural diagram of a battery according to an embodiment of the present application;
FIG. 2 is a schematic structural diagram of a battery module according to an embodiment of the present application;
FIG. 3 is a schematic structural diagram of a battery pack according to an embodiment of the present application;
FIG. 4 is an exploded view of a battery pack according to an embodiment of the present application; and
FIG. 5 is a schematic diagram of an embodiment where a battery according to an embodiment of the present application used as an electrical device of a power source.

### Reference signs:

1: secondary battery; 2: battery module; 3: battery pack; 4: upper case body; 5: lower case body.

### DESCRIPTION OF EMBODIMENTS

The present application will be further described below with reference to specific embodiments. It should be understood that these specific embodiments are merely illustrative of the application and are not intended to limit the scope of the present application.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments. A person skilled in the art explicitly and implicitly understands that the described embodiments in the present application may be combined with another embodiment.

The "range" disclosed in this application is limited in the form of a lower limit and an upper limit. A given range is limited by selecting a lower limit and an upper limit, which define the boundaries of the specific range. The range defined in this way may include or not include end values and may be combined arbitrarily, that is, any lower limit may be combined with any upper limit to form a range not explicitly recorded, and any lower limit may be combined with other lower limits to form a range not explicitly recorded, and likewise any upper limit may be combined with any other upper limit to form a range not explicitly recorded. In addition, each individually disclosed point or individual value may itself be combined as a lower limit or an upper limit with any other point or individual value, or with other lower or upper limits, to form a range not explicitly recorded.

Unless otherwise specified, all embodiments and optional embodiments of the present application may be combined with each other to form new technical solutions, and it is conceivable that such technical solutions should be included in the application of the present application.

Unless otherwise specified, all technical solutions and optional technical solutions of the present application may be combined with each other to form new technical solutions, and it is conceivable that such technical solutions should be included in the application of the present application.

Unless otherwise specified, all steps in this application may be performed sequentially or randomly, preferably sequentially. For example, the method includes steps S1 and S2, meaning that the method may include steps S1 and S2 performed sequentially or steps S2 and S1 performed sequentially. For example, the above-mentioned method may further include step S3, meaning that step S3 may be added to the method in any order, e.g. the method may include steps S1, S2, and S3, or steps S1, S3, and S2, or steps S3, S1, and S2, and the like.

Unless otherwise specified, the terms "including" and "containing" as used herein are meant to be open or closed. For example, the "including" and "containing" may mean that other components not listed may be further included or contained, or only the listed components may be included or contained. In addition, in the present application, the terms "a plurality of" and "a plurality of types of" mean two or more.

Unless otherwise specified, the term "and/or" in the present application is only an associative relationship for describing associated objects, indicating that three relationships may be present. For example, A and/or B may indicate three cases: presence of only A; presence of both A and B; and presence of only B. In addition, the character "/" herein generally indicates that associated objects are in a "or" relationship.

Unless defined otherwise, all technical and scientific terms used herein have the same meaning as commonly understood by a person skilled in the art to which the present application belongs; the terms used herein are used for describing particular embodiments only and are not intended to limit the present application; and the terms "comprising", "including", and "having" and any variations thereof in the description, claims and the above drawings of the present application are intended to cover non-exclusive inclusion. Unless otherwise specified, the terms used in the present application have the meanings commonly understood by those skilled in the art. Unless otherwise specified, the numerical values of each parameter mentioned in the present application may be measured by various measuring methods commonly used in the art, for example, according to the methods given in the embodiments of the present application.

At present, with constant advancement of the green and environmental-friendly topic, the application of lithium ion batteries has been advanced into various aspects of life, including vehicles, electronic devices, energy storage devices, and the like. However, as their applications are constantly deepened, their potential problems are also receiving increasing attention. The lithium ion batteries may accumulate internal heat due to overcurrent, internal dendrite, internal short-circuit, overcharge, and the like, and when the heat accumulates to a certain extent, an exothermic chain reaction may occur in the electrolytic solution, the positive electrode, and other internal materials, finally resulting in thermal runaway.

In the present application, by applying the polymer having a structure shown in formula I to the battery, in the case of abuse such as high temperature or overcharge of the battery, the ring opening polymerization gelate the electrolytic solution to increase the internal resistance of the battery, thereby reducing the probability of thermal runaway of the battery and improving the thermal stability of the battery. Moreover, the polymer carries substituent groups to further satisfy the intended effects, for example, the flame retardant effect may be improved or the side reaction of the battery may be reduced by halogen substitution.

In view of this, the first aspect of the present application provides a polymer, having a general formula shown in formula I: 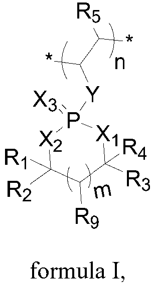 where m includes 0 and/or 1; n is a positive integer; X₁ and X₂ each independently include oxygen, sulfur or imino (-NH-); X₃ includes oxygen or sulfur; Y includes any one of oxygen, sulfur, imino, -S-C₁₋₈ alkylene unsubstituted or substituted with any group, -NH-C₁₋₈ alkylene unsubstituted or substituted with any group, C₁₋₈ alkylene unsubstituted or substituted with any group, and C₁₋₈ alkoxylene unsubstituted or substituted with any group (i.e., -O-C₁₋₈ alkylene); R₁, R₂, R₃, and R₄ each independently include any one of hydrogen, fluorine, C₁₋₁₀ alkyl unsubstituted or substituted with any group, and C₁₋₁₀ alkoxyl unsubstituted or substituted with any group; R₅ includes any one of C₁₋₁₀ alkyl unsubstituted or substituted with any group and 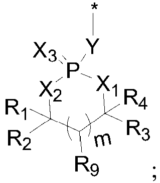 and R₉ includes C₁₋₁₀ alkyl unsubstituted or substituted with any group; and the any group includes at least one of halogen, alkyl, alkoxyl, an ester group, and carbonyl.

Unless otherwise specified, "*" in the present application represents a linking moiety between the same or different atoms or terminal moieties of a chemical formula. It should be understood that the elements or groups at the positions X₁, X₂, X₃ may be the same or different. The term "halogen" may optionally range from fluorine, chlorine, bromine, and iodine. The term "C₁₋₈ alkyl" should be understood to represent linear or branched saturated monovalent hydrocarbyl having 1, 2, 3, 4, 5, 6, 7 or 8 carbon atoms, and the term "C₁₋₈ alkoxyl" should be understood as -O-C₁₋₈ alkyl, representing that the alkyl group is linked to the remainder of the molecule via an oxygen atom. The term "C₁₋₈ alkylene" should be understood to represent linear or branched saturated divalent hydrocarbyl having 1, 2, 3, 4, 5, 6, 7 or 8 carbon atoms, and the term "C₁₋₈ alkoxylene" should be understood as -O-C₁₋₈ alkylene. Correspondingly, the term "C₁₋₁₀ alkyl" should be understood to represent linear or branched saturated monovalent hydrocarbyl having 1, 2, 3, 4, 5, 6, 7, 8, 9 or 10 carbon atoms, and the term "C₁₋₁₀ alkoxyl" should be understood as -O-C₁₋₁₀ alkyl. The term "C₃₋₁₀ alkyl" should be understood to represent linear or branched saturated monovalent hydrocarbyl having 3, 4, 5, 6, 7, 8, 9 or 10 carbon atoms.

In the term "unsubstituted or substituted with any group", the "substituted with any group" means that at least one hydrogen atom bonded to a carbon atom is substituted with any group other than hydrogen, for example, may be substituted with fluorine, and as exemplified by "C₁₋₁₀ alkyl unsubstituted or substituted with any group", it should be understood that C₁₋₁₀ alkyl may be unsubstituted or substituted with one or more (e.g., 1, 2, 3, 4) substituents at any position, and when there are two or more substituents, the plurality of substituents may be the same or different and may be located at the same or different positions. In the "substituted with any group" described in the present application, the any group includes, but is not limited to, at least one of halogen, alkyl, alkoxyl, an ester group, carbonyl, where the alkyl or alkoxyl included in the any group may be chain or cyclic, for example, the any group may include one or more of halogen, chain alkyl, cyclic alkyl, chain alkoxyl, cyclic alkoxyl. In addition, it should also be understood that when one or more of "R₁","R₂","R₃","R₄","R₅", and "R₉" are substituted, the substituent groups located at "R₁","R₂","R₃","R₄","R₅", and "R₉" may be the same or different, and the numbers and substituting positions of the substituent groups located at "R₁","R₂","R₃","R₄","R₅", and "R₉" each are independent.

In the polymer according to the first aspect of the present application, when m is 0 or 1, even if the polymer has a five-membered ring or six-membered ring structure, the polymer may have better stability. The polymer having the structure of formula I has a cyclic structure that is the same as or similar to the cyclic phosphate (e.g., oxygen in the cyclic phosphate is substituted with sulfur, amino (ene), and the like), i.e. 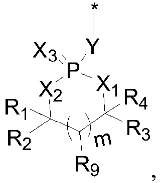 the polymer has a better flame retardant property and may improve the thermal stability of the battery; the polymer may be subjected to ring opening polymerization in the case of abuse such as high temperature or overcharge of the battery to gelate the electrolytic solution, which increases the internal resistance of the battery and decreases the probability of thermal runaway of the battery; and in addition, a substituent group of the polymer may be used to further satisfy an intended effect, for example, halogen substitution may be used to improve a flame retardant effect or reduce a side reaction of the battery. In summary, the introduction of the polymer into the battery contributes to improving the thermal stability of the battery, reducing the probability of combustion and thermal runaway of the battery. The structural characterization of the polymer may be performed in conjunction with conventional means such as infrared spectroscopy (IR), nuclear magnetic resonance (NMR, e.g., ¹H, ¹³C, ¹⁹F, ³¹P, and the like), mass spectrometry (MS), elemental analysis, gel permeation chromatography (GPC), laser Raman spectroscopy (LR), and the like.

It should be understood that in the general formula shown in formula I, n represents the number of repeating units in the general formula of formula I, and the value range of n may be selected under a reasonable molecular weight of the polymer. The polymer in the first aspect of the present application may include a plurality of compounds satisfying formula I, or may include only a single compound satisfying formula I, and when the polymer includes only a single compound satisfying formula I, the value of n in formula I may be greater than 1, for example, may be not less than 5 or not less than 10.

It should be understood that the polymer in the first aspect of the present application may be a single compound, or may include a plurality of compounds satisfying the general structure shown in formula I.

Further, the polymer in the first aspect of the present application may further improve the properties of the polymer, including but not limited to flame retardant property, retention of electrolytic solution, improving effect on thermal stability of battery, and the like, by further controlling the type, optional range, average molecular weight, type and specific selection of polymerized monomers, and the like, in addition to satisfying the above conditions. That is, in addition to satisfying the above conditions, one or more of the following conditions may be optionally satisfied.

In some embodiments of the present application, the "halogen" includes fluorine. That is, in formula I, Y may include any one of oxygen, sulfur, imino, unsubstituted -NH-C₁₋₈ alkylene or alkylene substituted with fluorine, C₁₋₈ alkylene unsubstituted or substituted with fluorine, and C₁₋₈ alkoxylene unsubstituted or substituted with fluorine; R₁, R₂, R₃, and R₄ may each independently include any one of hydrogen, fluorine, C₁₋₁₀ alkyl unsubstituted or substituted with fluorine, and C₁₋₁₀ alkoxyl unsubstituted or substituted with fluorine; and R₅ may include any one of C₁₋₁₀ alkyl unsubstituted or substituted with fluorine, and 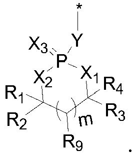 After the polymer having the structural formula of formula I is bonded to a fluorine-containing substituent (e.g., fluorine-substituted alkyl or fluoroalkyl), the antioxidant stability effect is better. The heat release value and spontaneous combustion rate of the battery may be reduced so as to reduce the probability of combustion and thermal runaway of the battery, so that the flame retardant property and the thermal stability of the battery are further advantageously improved. Moreover, the negative electrode may also be passivated to reduce the side reaction between the negative electrode and the electrolytic solution, thereby improving the retention of the electrolytic solution.

In some embodiments of the present application, X₁ and X₂ each may independently include oxygen or sulfur; Y may include any one of oxygen, C₁₋₈ alkylene unsubstituted or substituted with fluorine, and C₁₋₈ alkoxylene unsubstituted or substituted with fluorine; R₁, R₂, R₃, and R₄ each may independently include any one of hydrogen, fluorine, C₁₋₁₀ alkyl unsubstituted or substituted with fluorine, and C₁₋₁₀ alkoxyl unsubstituted or substituted with flurione; R₅ may include any one of C₁₋₁₀ alkyl unsubstituted or substituted with fluorine, and 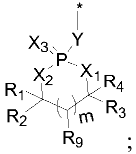 and R₉ includes C₁₋₁₀ alkyl unsubstituted or substituted with fluorine. Optionally, X₁ and X₂ each independently include oxygen; X₃ includes oxygen; and Y may include any one of oxygen, C₁₋₈ alkylene unsubstituted or substituted with fluorine, C₁₋₈ alkoxylene unsubstituted or substituted with fluorine. X₁, X₂, X₃, Y, R₁, R₂, R₃, R₄, R₅, and R₉ are selected within a given range, which may further reduce the probability of combustion and thermal runaway of the battery.

In some embodiments of the present application, an average molecular weight of the polymer may be 20,000-60,000, for example, 25,000, 30,000, 35,000, 40,000, 45,000, 50,000, 55,000, or the like, or may be a range formed by any of the above numerical values. Methods for testing the average molecular weight of the polymer include, but are not limited to, gel permeation chromatography (GPC). The polymer may be used in the electrolytic solution to improve the thermal stability of the battery. If the average molecular weight of the polymer is too low, it is difficult to form a network polymer, which affects the effect of improving the thermal stability of the battery, and if the average molecular weight is too high, the polymer is difficult to dissolve in the electrolytic solution. By making the average molecular weight of the polymer within the given range, the dispersibility in the electrolytic solution may be improved, which facilitates uniform film formation on the surface of the positive electrode and negative electrode sheets, improves the compatibility of the electrolytic solution with the positive electrode and negative electrode sheets, and further facilitates gelation of the electrolytic solution when the ring opening polymerization happens, which improves the thermal stability of the battery, and reduces the probability of combustion and thermal runaway of the battery.

In some embodiments of the present application, in the polymer shown in formula I, R₁, R₂, R₃, and R₄ each may independently include any one of C₁₋₁₀ alkyl unsubstituted or substituted with fluorine and C₁₋₁₀ alkoxyl unsubstituted or substituted with fluorine; and optionally, R₁, R₂, R₃, and R₄ each may independently include any one of C₁₋₁₀ alkyl substituted with fluorine and C₁₋₁₀ alkoxyl substituted with fluorine. Compared with substitution directly with hydrogen or fluorine, further substitution with (fluoro) alkyl or (fluoro) alkoxyl with 1 to 10 carbon atoms is beneficial to improving the molecular weight of the polymer and forming a network polymer, so that the thermal stability of the battery can be further improved; in addition, substitution with the fluoroalkyl (alkoxyl) chain can not only further significantly improve the oxidation resistance of the polymer due to the strong negative effect of fluorine atoms, improve the flame retardant effect, and improve the thermal stability of the battery, but also reduce the side reaction between the electrolytic solution and the negative electrode. Thus, R₁, R₂, R₃, and R₄ are selected within the given range, which may further reduce the probability of combustion and thermal runway of the battery.

In some embodiments of the present application, the polymerized monomer of the polymer of the general formula shown in formula I may include a cyclic phosphate compound having a double bond, and the polymerized monomer may allow the polymer to obtain cyclic phosphate or a cyclic structure similar to a cyclic phosphate structure (the cyclic phosphate or the cyclic structure similar to the cyclic phosphate structure includes 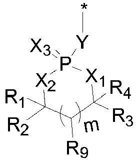 ), which is beneficial to improving the thermal stability of the battery. The cyclic phosphate compound having a double bond may be self-polymerized or graft-copolymerized with other polymerizable compounds to form the network polymer under an initiator or a high voltage. When used in the battery, it may have a film-forming effect on the surfaces of the positive electrode and negative electrode sheets of the battery, improve the compatibility between the electrolyte and the positive electrode and negative electrode sheets, suppress the side reaction between the electrode sheets and the electrolytic solution, and reduce the consumption of the electrolytic solution. In addition, the cyclic phosphate compound having a double bond is self-polymerized or copolymerized with other polymerizable compounds to form the network polymer, so that the molecular weight of the polymer is further improved, and the thermal stability of the battery is improved. It should be noted that the "cyclic phosphate compound" described in the present application may include, but is not limited to, a compound having cyclic phosphate, a compound having cyclic phosphate substituted with any group (such as at least one of fluorine, amino (ene), sulfur, alkoxyl (ene), alky 1(ene), - NH-C₁₋₈ alkylene, and the like), and a compound having a cyclic structure similar to that of the cyclic phosphate (e.g., any oxygen in the cyclic phosphate is substituted with at least one of sulfur, amino (ene), alkyl (ene), alkoxyl (ene), -NH-C₁₋₈ alkylene, -S-C₁₋₈ alkylene, and the like) as long as the cyclic phosphate compound having a double bond may be self-polymerized or copolymerized with other polymerizable compounds to obtain the polymer of the general formula shown in formula I, for example, the "cyclic phosphate compound" may include

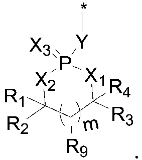

In some embodiments of the present application, the polymerized monomer of the polymer shown in formula I may be only the cyclic phosphate ester compound having a double bond, where the cyclic phosphate compound having a double bond may be the same compound, or may include a plurality of different cyclic phosphate compounds having a double bond. When used in the battery, the polymerized monomer may be polymerized and then introduced into the electrolytic solution, or the polymerized monomer may be directly added into the electrolytic solution to enable self-polymerization by adding the initiator or under the high pressure. Among them, only the cyclic phosphate ester compound having a double bond can be used as a polymerization monomer to further improve the flame retardant effect of the polymer, and the thermal stability of the battery can be significantly improved.

In some embodiments of the present application, the polymerized monomer of the polymer shown in formula I may include: 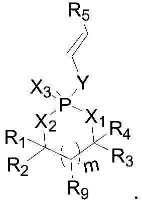 For example, the polymerized monomer of the polymer shown in formula I may include, but is not limited to, one or more of 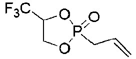 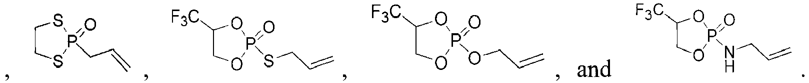 In an actual operating process, the polymer of formula I may be obtained either by self-polymerization of the polymerized monomer satisfying the formula or by copolymerization of the polymerized monomer satisfying the formula with other polymerizable compounds.

In some embodiments of the present application, the polymer shown in formula I may include at least one of the 276 compounds shown in structural formula I-1 to structural formula I-276, all of the 276 compounds shown in structural formula I-1 to structural formula I-276 may be used alone or in combination in the battery, and the 276 compounds shown in structural formula I-1 to structural formula I-276 have a cyclic phosphate five- or six-membered ring structure, have better stability, can further improve oxidation resistance and passivation effect on the negative electrode by using a fluorine substituent, and may improve the thermal stability of the battery, and reduce the probability of combustion and thermal runaway of the battery.

The structures of the 276 compounds shown in structure formula I-1 to structural formula I-276 are as follows:

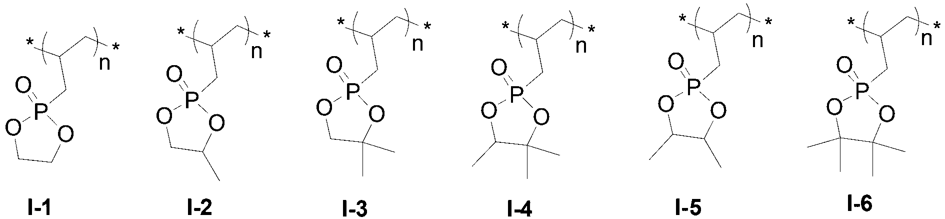

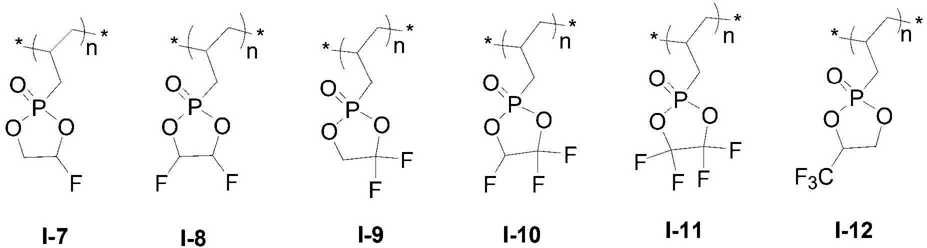

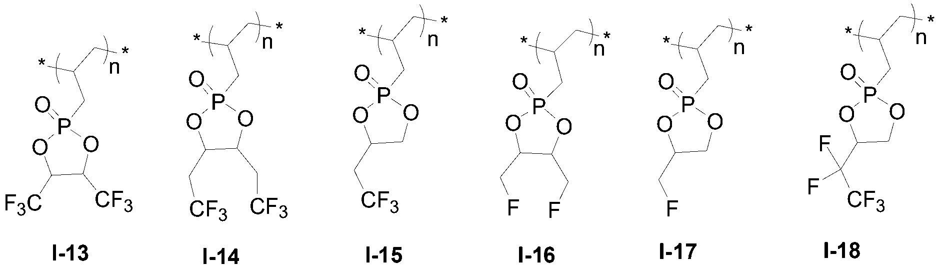

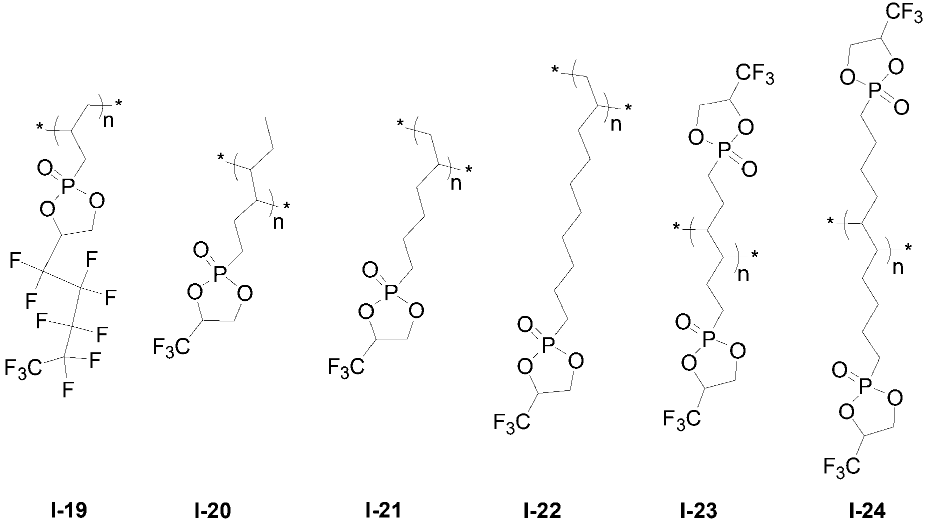

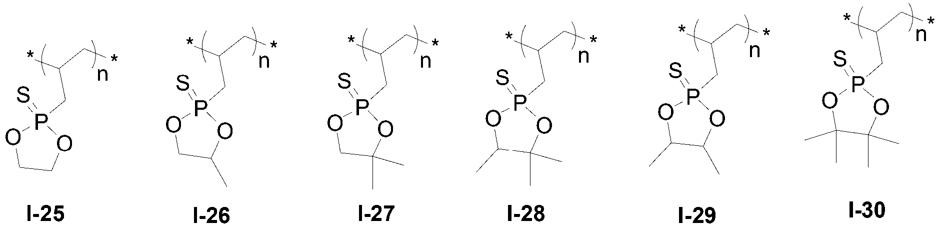

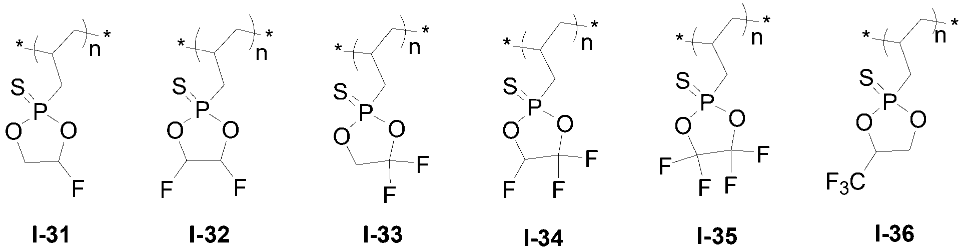

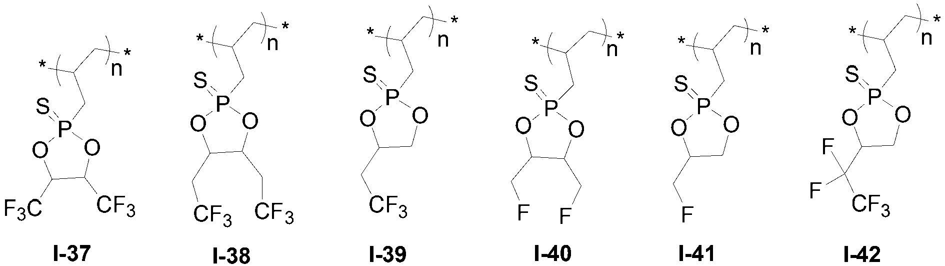

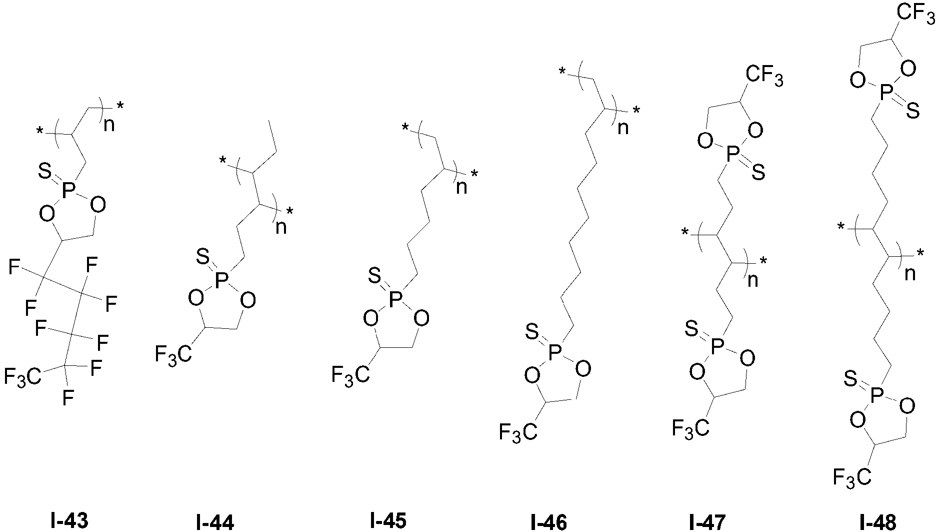

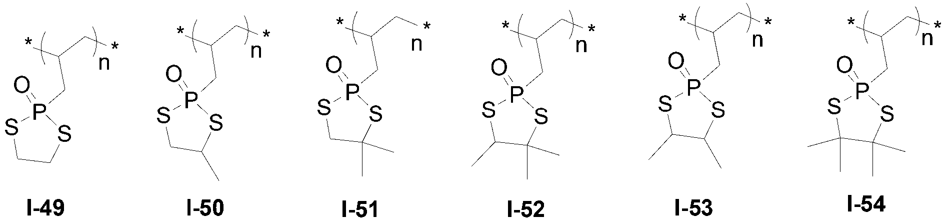

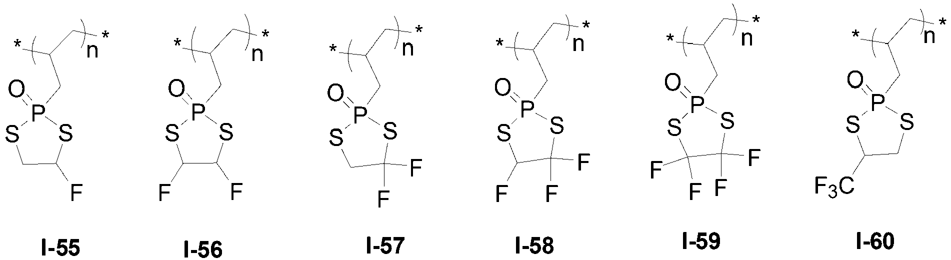

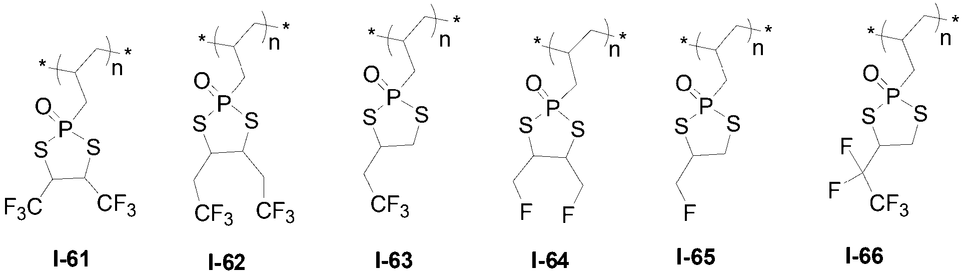

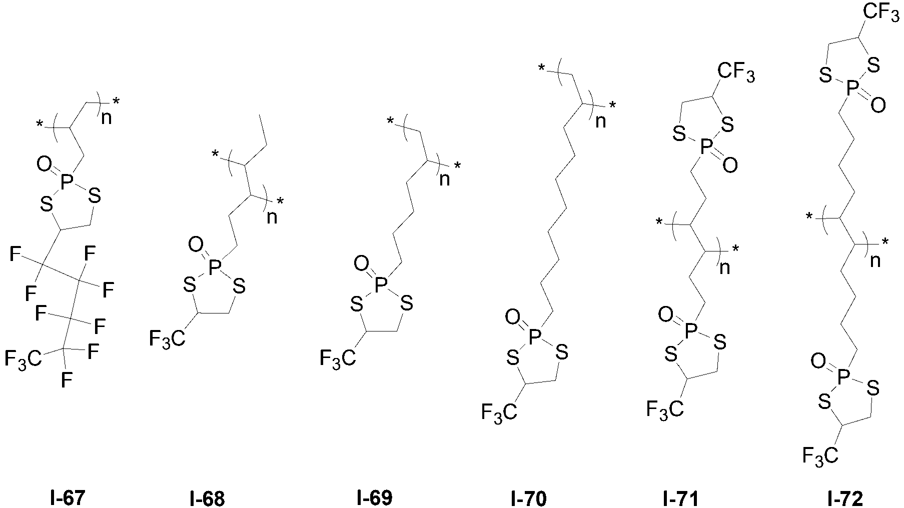

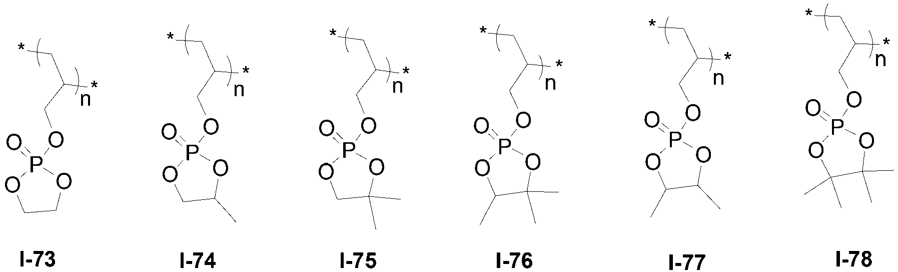

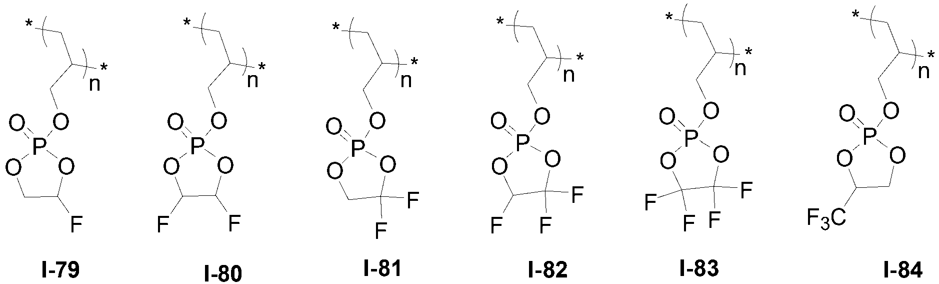

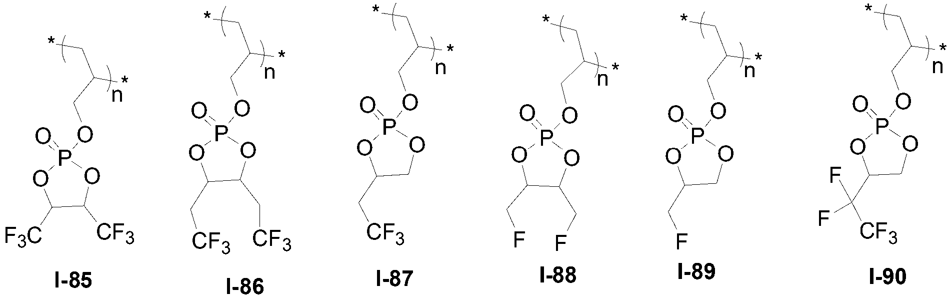

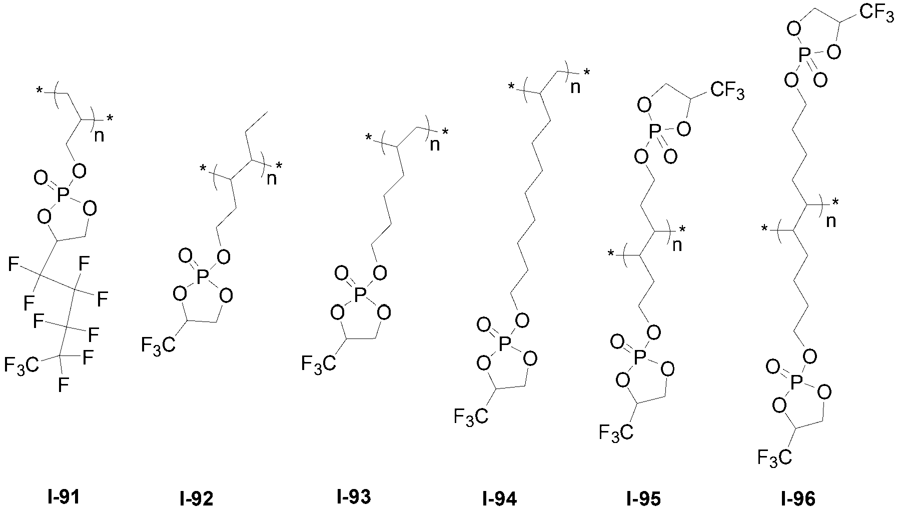

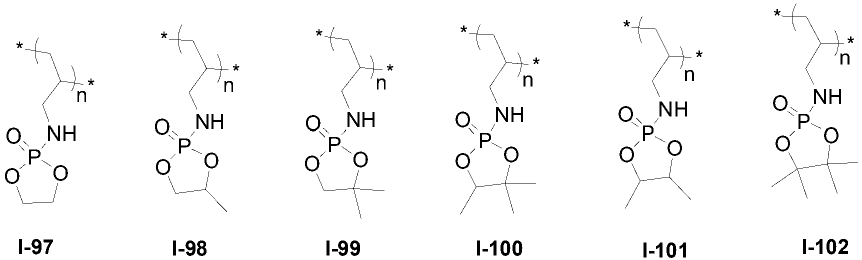

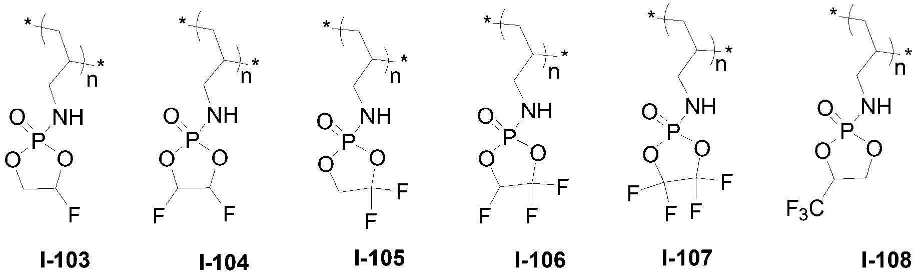

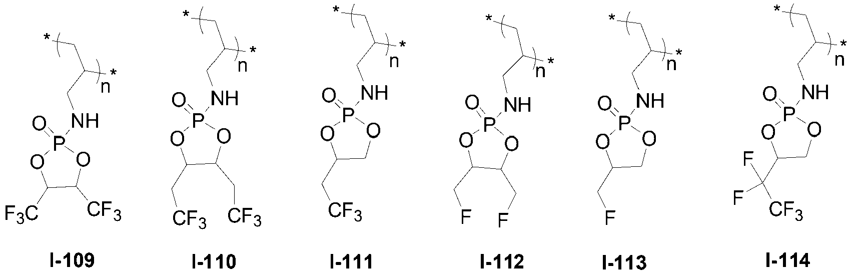

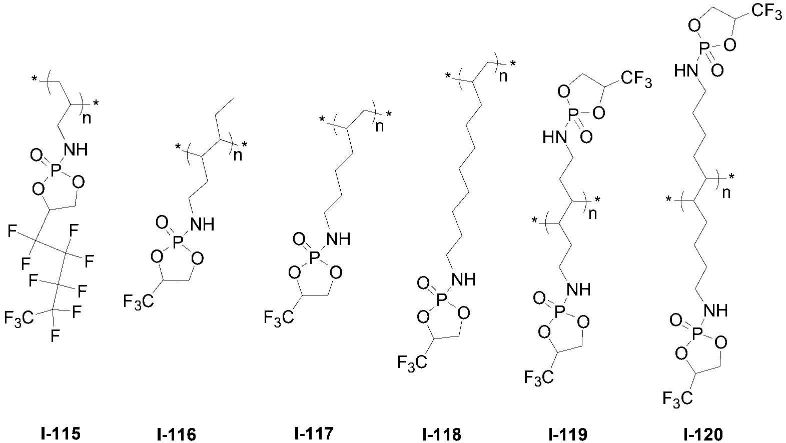

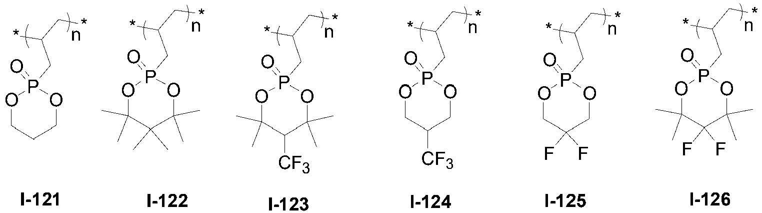

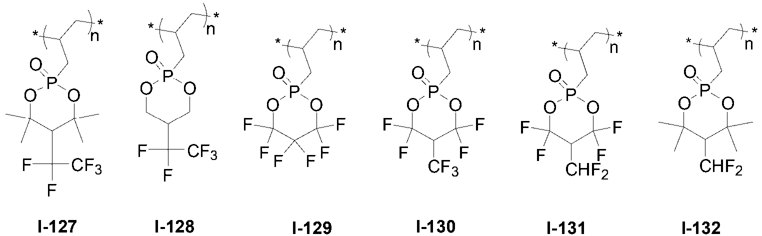

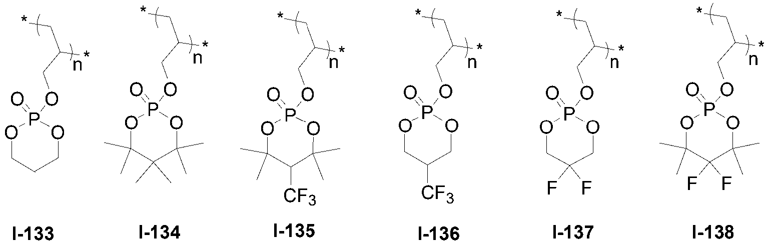

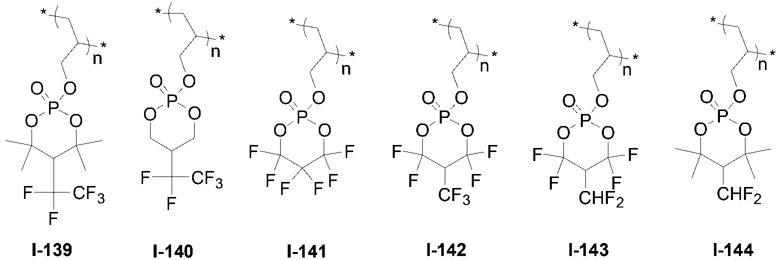

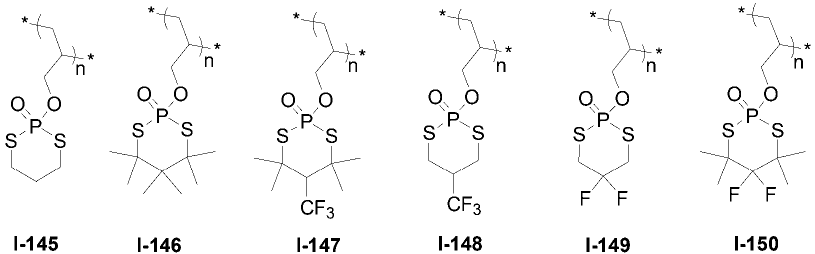

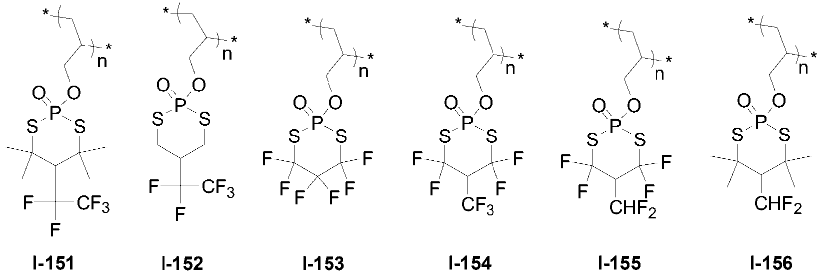

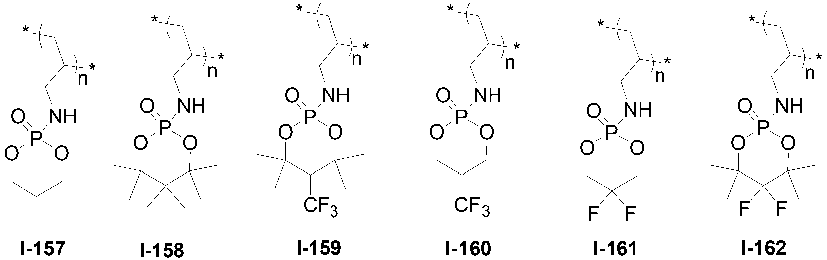

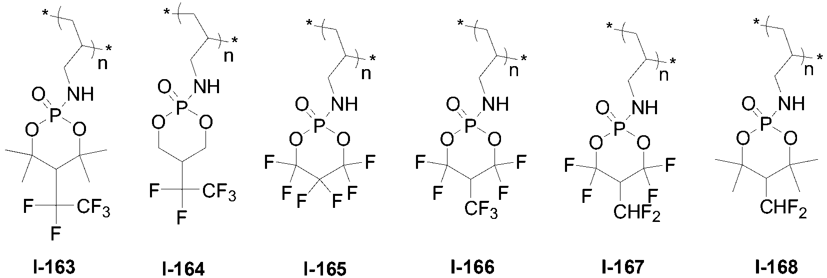

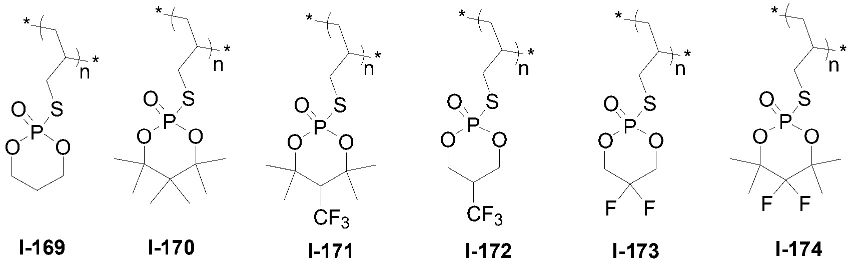

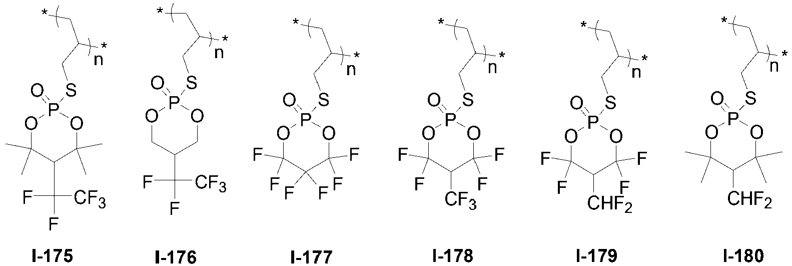

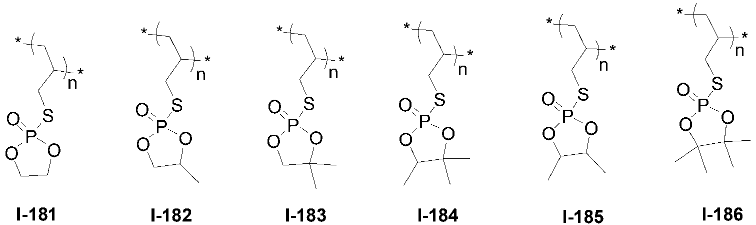

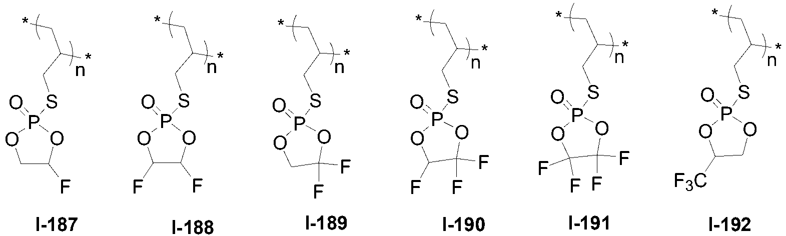

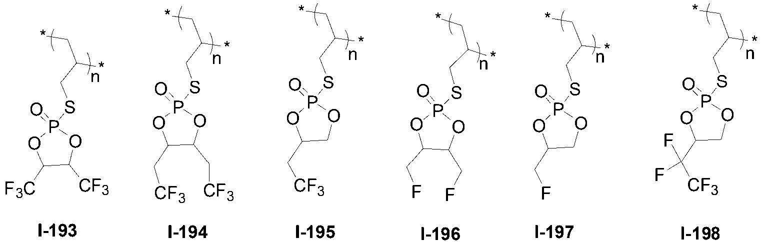

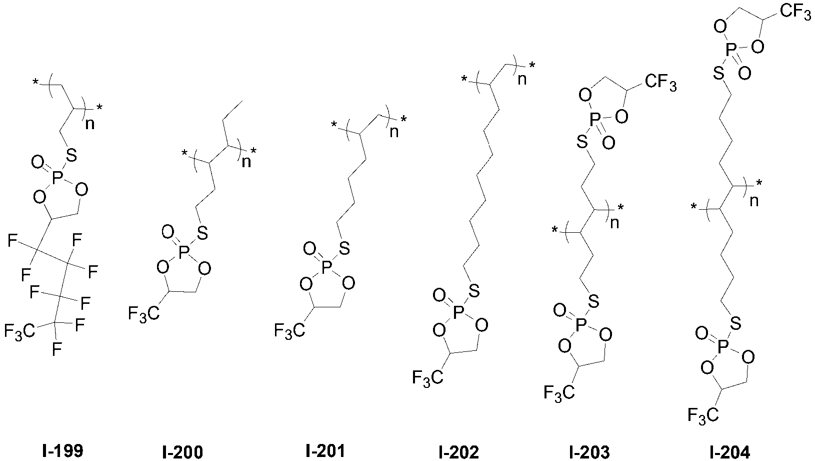

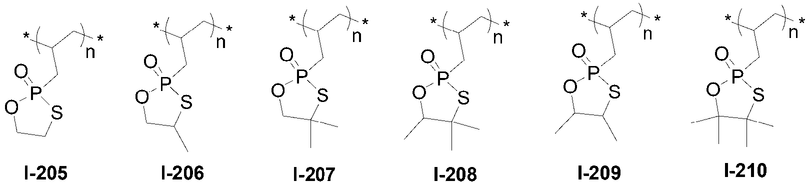

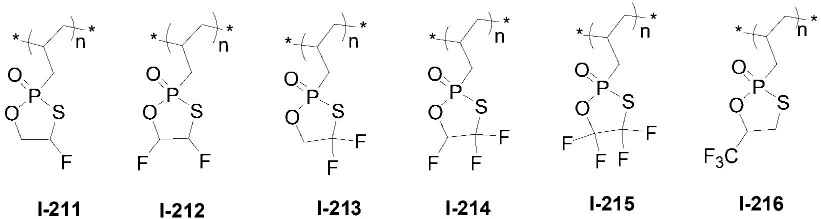

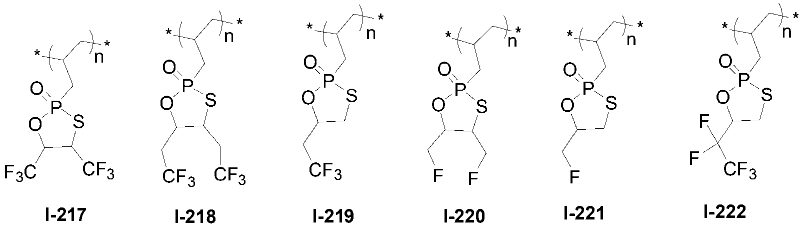

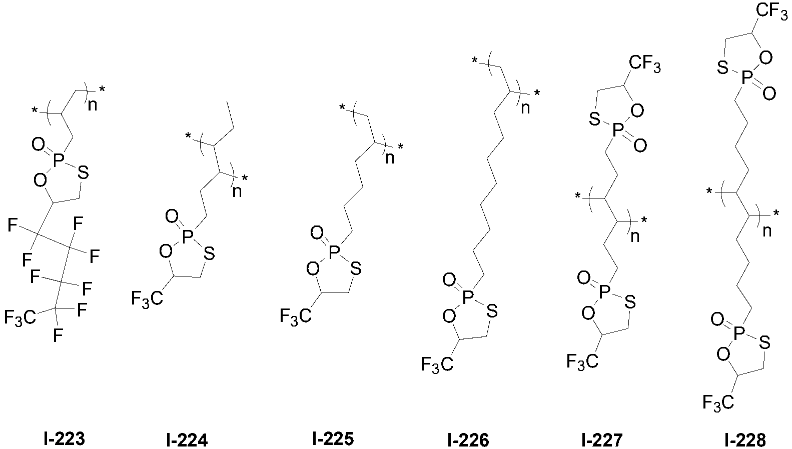

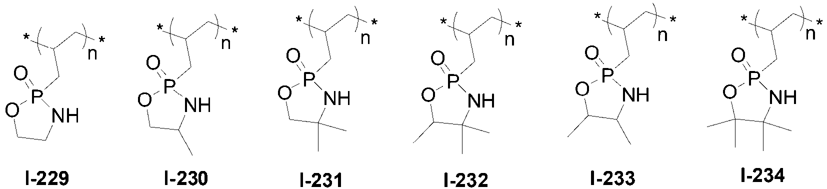

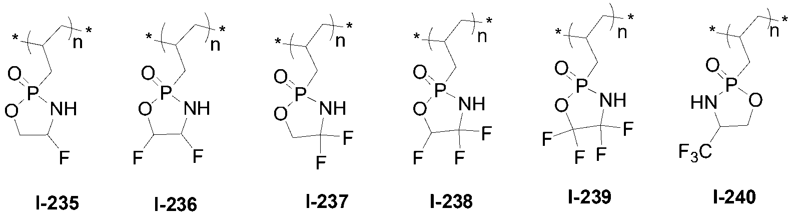

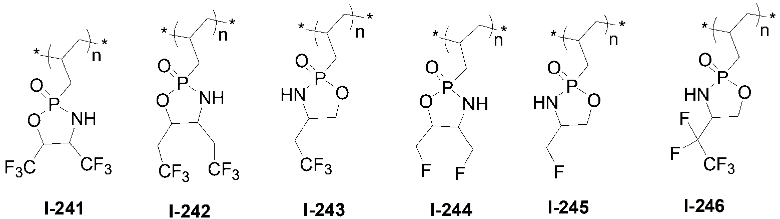

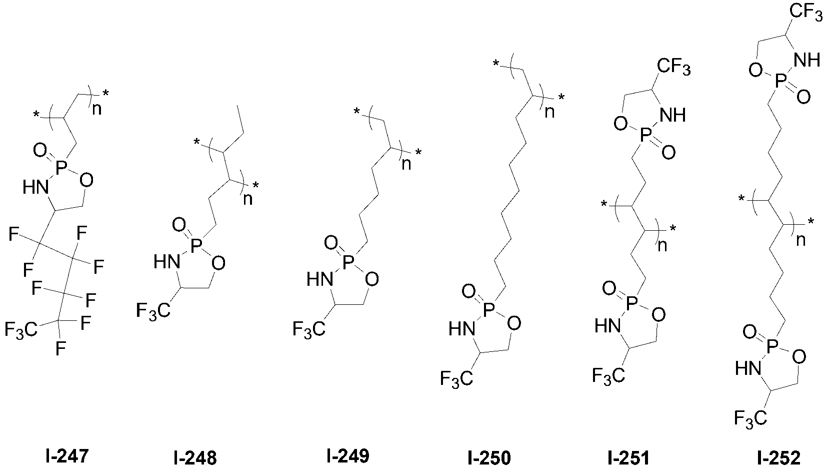

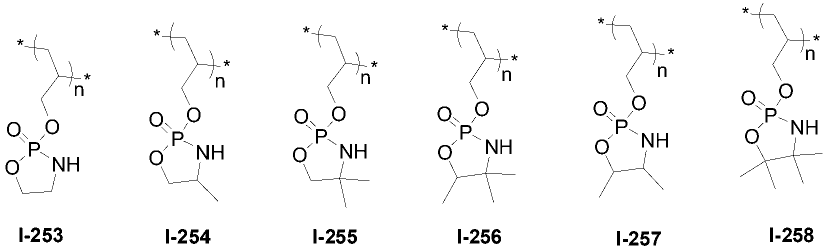

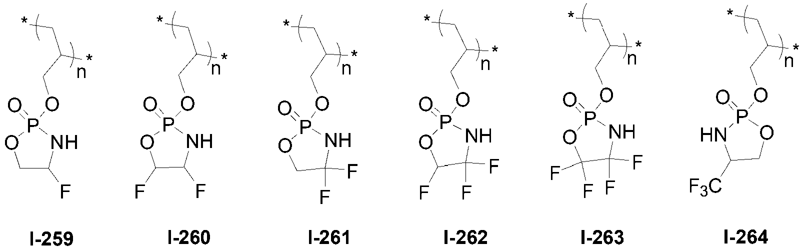

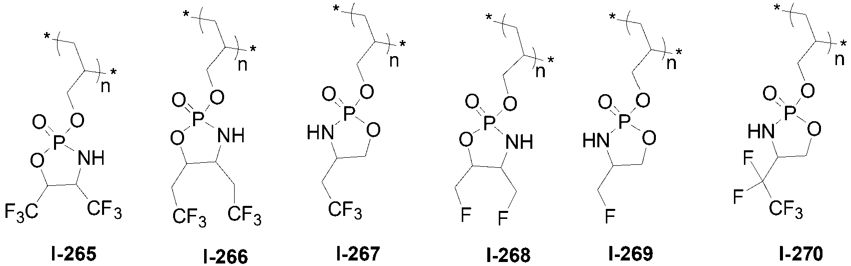

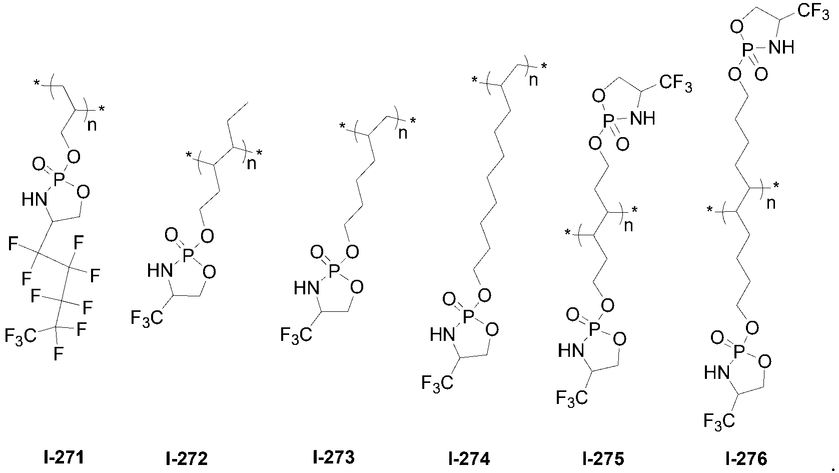

In some embodiments of the present application, the polymerized monomer of the polymer shown in formula I may further include a second polymerizable compound in addition to the cyclic phosphate compound having a double bond, where the second polymerizable compound is a polymerizable compound different from the cyclic phosphate compound having a double bond, and the general formula of the polymer may be shown in formula II: 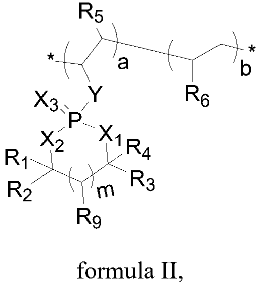 where a and b are each independently a positive integer, and 0.5≤a/b≤4, for example, the value of a/b may be 0.5, 1, 1.5, 2, 2.5, 3, 3.5, 4, or the like, or may be a range formed by any of the above numerical values. R₆ is any one of C₃₋₁₀ alkyl unsubstituted or substituted with any group, a C₃₋₁₀ epoxy group unsubstituted or substituted with any group, C₃₋₁₀ allyl unsubstituted or substituted with any group, C₃₋₁₀ (methyl)acryloylunsubstituted or substituted with any group, and C₃₋₁₀ acrylate unsubstituted or substituted with any group. Both the polymer shown in formula II and the polymer shown in formula I have a cyclic phosphate structure, and may also be subjected to ring opening polymerization in the case of abuse such as high temperature or overcharge of the battery to gelate the electrolytic solution, which improves the thermal stability of the battery and reduces the probability of combustion and thermal runaway of the battery. In addition, the polymer may further have properties of the second polymerizable compound, for example, the second polymerizable compound may be a polymerized monomer of a gel polymer electrolyte, so that after copolymerization of the cyclic phosphate compound having a double bond with the polymerized monomer of the gel polymer, the obtained polymer has better flame retardant effect and properties of the gel polymer electrolytic solution. The polymer is used in the battery, which is further beneficial to reducing the liquid leakage probability of the liquid electrolytic solution and the probability of electrode corrosion, oxidizing combustion, and the like induced by liquid leakage, improving the volume expansion of the battery during charge and discharge, and further improving the thermal stability of the battery. In the compound shown in formula II, a is the polymerization degree of the cyclic phosphate compound having a double bond, and b is the polymerization degree of the second polymerizable compound. If a is less relative to b, it is unfavorable to improve the flame retardant property of the polymer, and if a is greater relative to b, it is unfavorable to make the polymer satisfy the properties of the second polymerizable compound. The value of a/b is controlled within the given range, which is beneficial to making the polymer shown in formula II have both a better flame retardant property and properties of the second polymerizable compound.

In some embodiments of the present application, the second polymerizable compound may include at least one of a polymerized monomer, an oligomer, and a copolymer of the gel polymer electrolyte, and the second polymerizable compound within the given range may be copolymerized with the cyclic phosphate compound having a double bond to form a gel phase. The second polymerizable compound may include, but is not limited to, at least one of methyl methacrylate, styrene, methyl acrylate, ethyl acrylate, acrylic acid, trimethylsilyl methacrylate, acrolein dimethyl acetal, acrolein diethyl acetal, 2-phenoxyethyl acrylate, 3-perfluorohexyl-2-hydroxypropyl acrylate, trifluoroethyl methacrylate, propenyl-1,3-sultone, glycidyl methacrylate, acrylamide, trifluoroethyl acrylate, (oxymethyl acrylate) dimethylmethoxysilane, cyanoethyl acrylate, hydroxyethyl acrylate, triallyl trimellitate, hydroxypropyl acrylate, 3-(perfluoro-3-methylbutyl) 2-hydroxypropyl acrylate, 1-vinyl-3-methylimidazolium bis(trifluoromethanesulfonyl)imide, 1-allyl-3-ethylimidazolium bis(trifluoromethanesulfonyl)imide, 1-allyl-1-methylpyrrolidinium bis (trifluoromethanesulfonyl)imide, 1,6-bis (acryloyloxy)-2,2,3,3,4,4,5,5-octafluorohexane, pentafluorophenol acrylate, vinylene carbonate, maleic anhydride, ethyl cyanoacrylate, butyl acrylate, hexafluoroisopropyl methacrylate, hexafluorobutyl methacrylate, 2-hydroxyl-3-phenoxypropyl acrylate, hydroxyethyl methacrylate, and vinyl ethylene carbonate; further, the second polymerizable compound may optionally be at least one of vinylene carbonate, maleic anhydride, ethyl cyanoacrylate, butyl acrylate, hexafluoroisopropyl methacrylate, hexafluorobutyl methacrylate, hydroxy propyl acrylate, 2-hydroxyl-3-phenoxypropyl acrylate, hydroxyethyl methylacrylate, and vinyl ethylene acetate. The second polymeriable compound within the given range is selected, so that the polymer has both the better flame retardant property and the properties of the gel polymer electrolyte, and not only improve the thermal stability of the battery and reduce the probability of combustion and thermal runaway of the battery, but also improve the retention of the electrolytic solution, so as to buffer the volume expansion of the battery during charge and discharge.

A second aspect of the present application provides a method for preparing the polymer according to the first aspect of the present application, including self-polymerizing a cyclic phosphate compound having a double bond; and/or copolymerizing the cyclic phosphate compound having a double bond with a second polymerizable compound. Both methods may prepare the polymer having a cyclic phosphate structure. It may be understood that the features and effects described with respect to the polymer in the first aspect of the present application are also applicable to the method for preparing a polymer in the second aspect of the present application, which are not described herein again. In general, compared with the prior art, this method may not only obtain a polymer having a cyclic phosphate structure, but also satisfy different additional requirements by selecting specific types or structures of the polymerized monomer and/or the second polymerizable compound according to actual requirements, and may be used in the field of batteries to improve the thermal stability of the batteries, and reduce the probability of combustion and thermal runaway of the battery.

In some embodiments of the present application, before the cyclic phosphate compound having a double bond is self-polymerized or copolymerized with the second polymerizable compound, a polymerized monomer of the cyclic phosphate compound having a double bond may be prepared first, for example, an intermediate product may be prepared first, and then the intermediate product may be subjected to a cyclization or substitution reaction. For example:

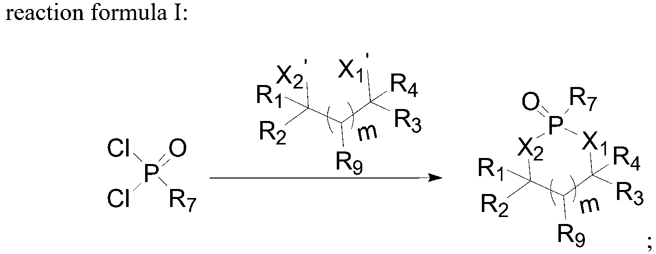

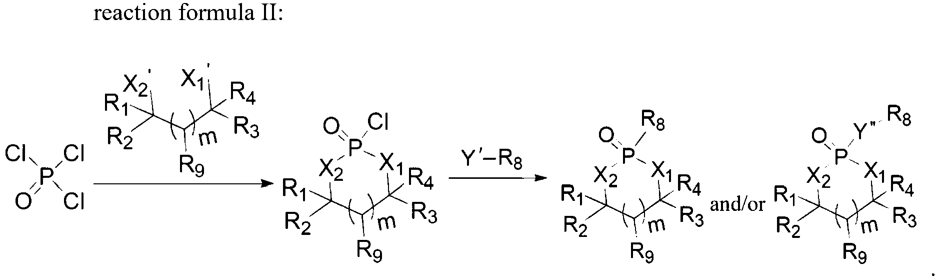

In some specific embodiments of the present application, it will be understood with reference to reaction formula I that the method preparing a polymerized monomer of a cyclic phosphate compound having a double bond may include: enabling a cyclization reaction of 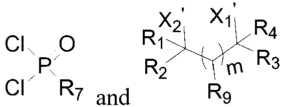 to obtain the compound with a general formula of

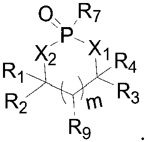

In some specific embodiments of the present application, it will be understood with reference to reaction formula II that the method for preparing a polymerized monomer of a cyclic phosphate compound having a double bond may include: enabling a substitution reaction of 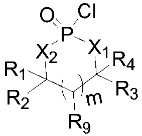 and Y'-R₈ to obtain the compound with a general formula of 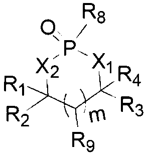 and/or 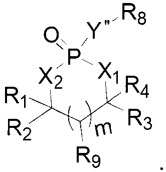 It may be understood that Y'-R₈ may not only be a single compound, but also obtained by mixing various compounds satisfying requirements of Y'-R₈.

m includes 0 and/or 1; X₁' and X₂' each independently include hydroxyl, mercapto or amino; X₁ and X₂ each independently include oxygen, sulfur or imino; R₁, R₂, R₃, and R₄ each independently include any one of hydrogen, fluorine, C₁₋₁₀ alkyl unsubstituted or substituted with any group, and C₁₋₁₀ alkoxyl unsubstituted or substituted with any group; R₇ and R₈ each independently include C₂₋₁₁ olefin unsubstituted or substituted with any group; Y' includes hydrogen, hydroxyl, mercapto or amino; Y" includes oxygen, sulfur or imino, and R₉ includes C₁₋₁₀ alkyl unsubstituted or substituted with any group; and the any group includes at least one of halogen, alkyl, alkoxyl, an ester group, and carbonyl. It may be understood that both 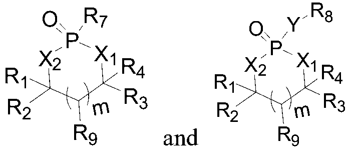 may be used as the polymerized monomer of the cyclic phosphate compound having a double bond.

In some embodiments of the present application, 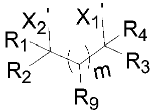 in reaction formula I and reaction formula II may include, but is not limited to, at least one of ethylene glycol, ethanedithiol, 2-mercaptoethanol, mercaptoethylamine, ethanol amine, ethylene diamine, 1,3-propanediol, 1,3-propanedithiol, 3-mercapto-1-propanol, 3-amino-1-propanol, 3-mercapto-1- propylamine, 1,3-propanediamine as long as it is capable of reacting with 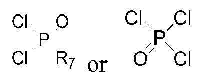 form a five-membered ring or a six-membered ring.

In some embodiments of the present application, a method for synthesizing the compound 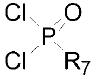 in reaction formula I and the compound 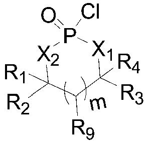 in reaction formula II includes, but is not limited to, the method shown in reaction formula I and reaction formula II, where in reaction formula III, as a specific example, the method includes: taking Br-R₇ as allyl bromide, reacting P(OEt)₃ (triethyl phosphite) with allyl bromide, and dissolving the prepared diethyl allylphsphonate in an organic solvent (for example, acetonitrile), adding anhydrous potassium iodide, under argon protection, dropwise adding trimethylchlorosilane (TMSCl) at room temperature, removing trimethylchlorosilane and the solvent after reaction for a period of time, adding dichloromethane, dropwise adding oxalyl chloride, and distilling the mixture at a reduced pressure after reaction for a period of time to give

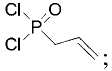

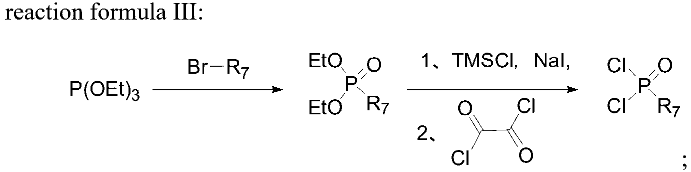

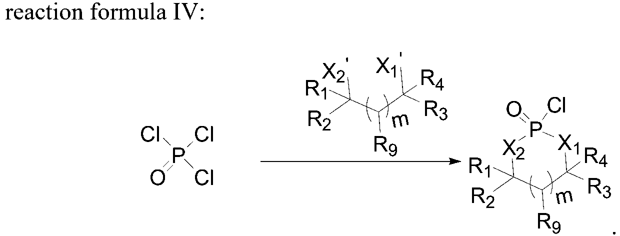

In some specific embodiments of the present application, it will be understood with reference to the following reaction formula that the method for preparing a polymerized monomer of the cyclic phosphate compound having a double bond may include, but is not limited to, the following: 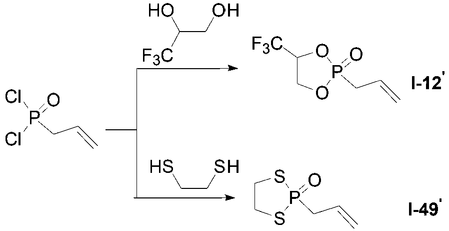 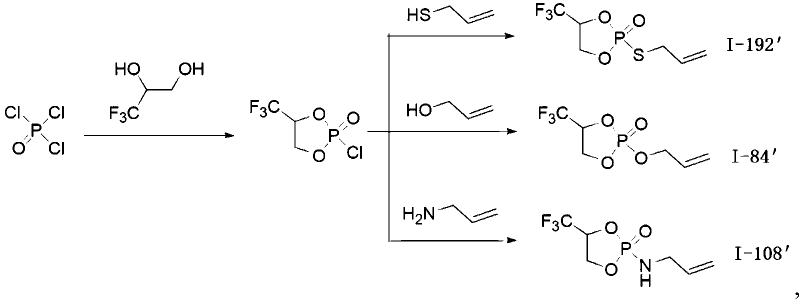 the prepared polymerized monomers I-12', I-49', I-192', I-84', and I-108' may be used as polymerized monomers of the polymer I-12, the polymer I-49, the polymer 1-192, the polymer I-84, and the polymer 1-108, respectively.

As a specific example, the method for preparing the polymerized monomer I-12' may include: (a) synthesizing 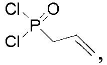 specifically, heating triethyl phosphite (19.5 g, 117 mmol) and allyl bromide (17.3 g, 143 mmol) at 70°C for 24 h, and performing distillation and impurity removal to give a colorless liquid (19.5 g, yield: 93.56%) which is directly used in the next step. Dissolving the colorless liquid diethyl allylphosphate (25.0 g, 150 mmol) in acetonitrile (100 mL), adding anhydrous potassium iodide (42.0 g, 300 mmol), and protecting the mixture with argon. Dropwise adding trimethylchlorosilane (68.0 g, 600 mmol) at room temperature, and after addition, performing a reaction on the system at 40°C for 2 h. Performing distillation at a reduced pressure to remove excess trimethylchlorosilane and acetonitrile, dropwise adding 100 mL of dichloromethane, dropwise adding oxalyl chloride (51.0 g, 600 mmol) and DMF (0.5 mL) at room temperature, and after dropwise addition, stirring the mixture at room temperature for 16 h. Performing distillation under a reduced pressure to obtain a colorless liquid, so as to yield a product 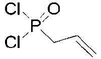 (14.3g, yield: 60%). (b) a cyclization reaction, specifically, dissolving 3,3,3-trifluoro-1,2-propanediol (10.52 g, 80.9 mmol) and triethylamine (22.5 mL, 161.8 mmol) in anhydrous tetrahydrofuran (100 mL) and stirring the mixture at room temperature under argon protection for 5 min. Cooling the mixture to -20°C and dropwise adding 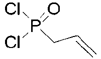 (12.86 g, 80.9 mmol), stirring the mixture at room temperature for 3 h, after reaction, adding water (50 mL) to quench the mixture, and extracting the mixture with ethyl acetate (100 mL×2 times) and washing the mixture with 0.1M hydrochloric acid (100 mL×2 times) and saturated brine (50 mL×2 times). Drying an organic phase over anhydrous sodium sulfate, filtering, and concentrating the organic phase at a reduced pressure to remove the organic solvent to give a colorless liquid (10.89 g, 62.34%), so as to obtain the polymerized monomer I-12'.

Characterizing and analyzing the prepared target product by methods such as ¹H NMR (CDCl₃, 400 MHz), δ (ppm): 5.70(m, 1H), 5.01(m, 2H), 4.74 (m, 2H), 4.12(m, 1H), 3.68 (m, 2H), ¹³C NMR (CDCl₃, 100 MHz), δ(ppm): 132.7, 115.9, 114.5, 100.4, 64.9, 28.8, ¹⁹F NMR (CDCl₃, 376 MHz), δ(ppm): -78.9; ³¹P NMR (CDCl₃, 160 MHz), δ(ppm): 44.2, HRMS(ESI⁺) m/z [M]⁺ calcd.for C₆H₈F₃O₃P: 216.0163. found: 216.0169.

As a specific example, a method for synthesizing the polymer I-12 includes: placing 1.5 g of the polymerized monomer I-12' and 32 mg of azobisisobutyronitrile (AIBN) in a 25 mL single-neck flask, oil-pumping the system to vacuum for 10 min after solidification in liquid nitrogen, then melting and filling the system with argon, repeating the above steps 4 times, and finally stirring the system in an oil bath at 70°C for 22 h. After the reaction is complete, dropwise adding the mixture into 20 mL of n-hexane to precipitate a solid, filtering the solid by suction to give 1.23g of a solid (yield: 82%). Elemental analysis is performed on the target product: Elements analysis: calcd: C, 33.35;H, 3.75; F, 26.38; O, 22.21; P, 14.33. Found: C, 34.15; H, 3.65; O, 21.28; P, 14.52. Mₙ: 36000, PDI: 1.8.

As a specific example, a method for preparing the polymerized monomer I-49' may include: (a) synthesizing 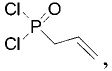 as shown above. (b) performing a cyclization reaction on 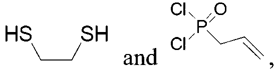 for the detailed process, referring to the method for preparing the polymerized monomer I-12'. Characterizing and analyzing the obtained target product by methods such as ¹H NMR, ¹³C NMR, ³¹P NMR, and HRMS, with the following results: ¹H NMR (CDCl₃, 400 MHz), δ (ppm): 5.70(m, 1H), 5.01(m, 2H), 2.86(m, 4H), 2.02 (m, 2H); ¹³C NMR (CDCl₃, 100 MHz), δ(ppm): 132.7, 115.9, 31.7, 31.1; ³¹P NMR (CDCl₃, 160 MHz), δ(ppm): 43.6; HRMS(ESI⁺) m/z [M]⁺ calcd.for C₅H₉S₂OP: 179.9832. found: 179.9837.

As a specific example, the method for preparing the polymerized monomer I-192' may include: (a) synthesizing 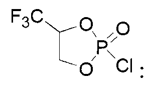 specifically, dissolving 3,3,3-trifluoro-1,2-propanediol (10.52 g, 80.9 mmol) and triethylamine (15.23 g, 150.5 mmol) in dichloromethane (80 ml), dropwise adding phosphorus oxychloride (11.78 g, 76.8 mmol) at 5°C, and after dropwise addition, continuing the reaction for 2 h. Performing filtration to remove triethylamine hydrochloride, drying the filtrate over anhydrous magnesium sulfate and concentrating the filtrate under a reduced pressure to remove dichloromethane, and recrystallizing toluene to give 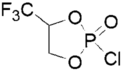 (11.51 g, yield: 70.12%). (b) performing a substitution reaction on 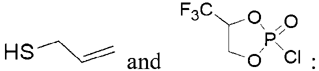 specifically, dissolving 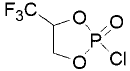 (11.15 g, 53.0 mmol) and triethylamine (2.46 mL, 17.7 mmol) in anhydrous dichloromethane (50 mL) and stirring the mixture at room temperature under argon protection for 5 min. Dropwise adding allyl mercaptan (4.33 g, 58.3 mmol), stirring the mixture at room temperature for 2 h, after reaction, adding water (50 mL) to quench the mixture, and extracting the mixture with ethyl acetate (100 mL×2 times) and washing the mixture with 0.1M hydrochloric acid (100 mL×2 times) and saturated brine (50 mL×2 times). Drying an organic phase over anhydrous sodium sulfate, filtering, and concentrating the organic phase at a reduced pressure to remove the organic solvent to give a white solid (8.49g, yield: 64.58%), so as to obtain the polymerized monomer I-192'. Characterizing and analyzing the prepared target product by methods such as ¹H NMR, ¹³C NMR, ¹⁹F NMR, ³¹P NMR, and HRMS, with the following results: ¹H NMR (CDCl₃, 400 MHz), δ (ppm): 5.96(m, 1H), 5.06(m, 2H), 4.12 (m, 1H), 3.68(m, 2H), 3.23 (m, 2H); ¹³C NMR (CDCl₃, 100 MHz), δ(ppm): 132.7, 115.9, 113.8, 99.2, 63.7, 21.0; ¹⁹F NMR (CDCl₃, 376 MHz), δ(ppm): -76.8; ³¹P NMR (CDCl₃, 160 MHz), δ(ppm): 43.2; HRMS(ESI⁺) m/z [M]⁺ calcd.for C₆H₈F₃O₃PS: 247.9884. found: 247.9879.

As a specific example, the method of preparing the polymerized monomer I-84' may include: (a) synthesizing 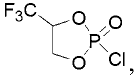 as shown above. (b) performing a substitution reaction on 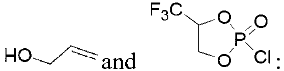 specifically, for the detailed process, referring to the method for preparing the polymerized monomer I-192'. Characterizing and analyzing the prepared target product by methods such as ¹H NMR, ¹³C NMR, ¹⁹F NMR, ³¹P NMR, and HRMS, with the following results:¹H NMR (CDCl₃, 400 MHz), δ (ppm): 5.89(m, 1H), 5.23(m, 2H), 4.70 (m, 2H), 4.18(m, 2H), 4.12 (m, 1H); ¹³C NMR (CDCl₃, 100 MHz), δ(ppm): 137.5, 115.1, 114.5, 96.6, 69.0, 61.1; ¹⁹F NMR (CDCl₃, 376 MHz), δ(ppm): -74.3; ³¹P NMR (CDCl₃, 160 MHz), δ(ppm): 46.7; HRMS(ESI⁺) m/z [M]⁺ calcd.for C₆H₈F₃O₄P: 232.0112. found: 232.0118.

As a specific example, the method for preparing the polymerized monomer I-108' may include: (a) synthesizing 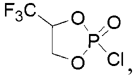 as shown above. (b) performing a substitution reaction on 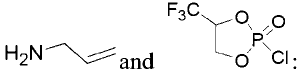 specifically, for the detailed process, referring to the method for preparing the polymerized monomer I-192'. Characterizing and analyzing the prepared target product by methods such as ¹H NMR, ¹³C NMR, ¹⁹F NMR, ³¹P NMR, and HRMS, with the following results: ¹H NMR (DMSO-*d₆*, 400 MHz), δ (ppm): 5.83(m, 1H), 5.16(m, 2H), 4.12 (m, 1H), 3.68(m, 2H), 3.32 (m, 2H), 2.12 (s, 1H); ¹³C NMR (DMSO-*d₆*, 100 MHz), δ(ppm): 134.3, 114.9, 114.2, 97.7, 62.2, 37.4; ¹⁹F NMR (DMSO-*d₆*, 376 MHz), δ(ppm): -73.2; ³¹P NMR ((DMSO-*d₆,* 160 MHz), δ(ppm): 44.8; HRMS(ESI⁺) m/z [M]⁺ calcd.for C₆H₉F₃NO₃P: 231.0272. found: 231.0268.

As a specific example, the method for preparing the polymerized monomer I-60' may include: (a) synthesizing 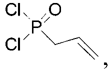 as shown above. (b) performing a substitution reaction on 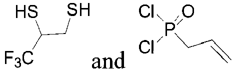 to give the polymerized monomer I-60', i.e., 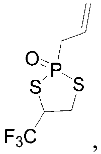 for the specific detail process, referring to the method for preparing the polymerized monomer I-12'.Characterizing and analyzing the prepared target product by methods such as ¹H NMR, ¹³C NMR, ¹⁹F NMR, ³¹P NMR, and HRMS, with the following results: ¹H NMR (DMSO-*d₆*, 400 MHz), δ (ppm): 5.70(s, 1H), 5.03(s, 1H), 4.97 (s, 1H), 3.62(m, 1H), 2.82 (m, 2H), 2.0 (s, 2H); ¹³C NMR (DMSO-*d₆*, 100 MHz), δ(ppm): 132.7, 120.1, 115.9, 53.7, 31.4, 18.2; ¹⁹F NMR (DMSO-*d₆*, 376 MHz), δ(ppm): -72.8; ³¹P NMR ((DMSO-*d₆*, 160 MHz), δ(ppm): 46.8; HRMS(ESI⁺) m/z [M]⁺ calcd.for C₆H₈F₃OPS₂: 247.9706. found: 247.9748.

As a specific example, the method for preparing the polymerized monomer I-125' may include: (a) synthesizing 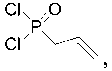 as shown above. (b) performing a substitution reaction on 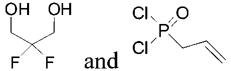 to give the polymerized monomer I-125', i.e., 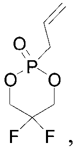 for the specific detail process, referring to the method for preparing the polymerized monomer I-12'. Characterizing and analyzing the prepared target product by methods such as ¹H NMR, ¹³C NMR, ¹⁹F NMR, ³¹P NMR, and HRMS, with the following results: ¹H NMR (DMSO-*d₆*, 400 MHz), δ (ppm): 5.70(s, 1H), 5.03(s, 1H), 4.97 (s, 1H), 4.74(m, 2H), 3.85 (s, 4H); ¹³C NMR (DMSO-*d₆*, 100 MHz), δ(ppm): 132.7, 115.9, 114.4, 81.1, 28.8; ¹⁹F NMR (DMSO-*d₆*, 376 MHz), δ(ppm): -89.2; ³¹P NMR ((DMSO-*d₆*, 160 MHz), δ(ppm): 47.4; HRMS(ESI⁺) m/z [M]⁺ calcd.for C₆H₉F₂O₃P: 198.0257. found: 198.0271.

As a specific example, the method for preparing the polymerized monomer I-137' may include: (a) synthesizing 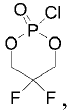 where, with reference to synthesis of 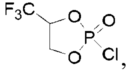 it is prepared by performing a reaction on 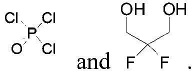 (b) performing a substitution reaction on 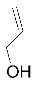 and 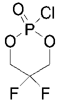 to give the polymerized monomer I-137', i.e., 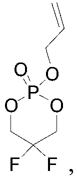 for the specific detail process, referring to the method for preparing the polymerized monomer I-192'. Characterizing and analyzing the prepared target product by methods such as ¹H NMR, ¹³C NMR, ¹⁹F NMR, ³¹P NMR, and HRMS, with the following results: ¹H NMR (DMSO-*d₆*, 400 MHz), δ (ppm): 5.89(s, 1H), 5.23(s, 2H), 4.70 (m, 2H), 4.35 (s, 4H); ¹³C NMR (DMSO-*d₆*, 100 MHz), δ(ppm): 137.5, 115.1, 114.4, 77.3, 69.0; ¹⁹F NMR (DMSO-*d₆*, 376 MHz), δ(ppm): -87.5; ³¹P NMR ((DMSO-*d₆*, 160 MHz), δ(ppm): 47.9; HRMS(ESI⁺) m/z [M]⁺ calcd.for C₆H₉F₂O₄P: 214.0207. found: 214.0241.

As a specific example, the method for preparing the polymerized monomer I-149' may include: (a) synthesizing 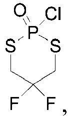 where with reference to synthesis of the monomer I-137', it is prepared by performing a reaction on 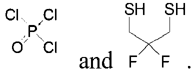 (b) performing a substitution reaction on 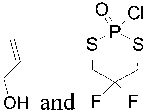 to give the polymerized monomer I-149', i.e., 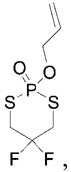 for the specific detail process, referring to the method for preparing the polymerized monomer I-192'. Characterizing and analyzing the prepared target product by methods such as ¹H NMR, ¹³C NMR, ¹⁹F NMR, ³¹P NMR, and HRMS, with the following results: ¹H NMR (DMSO-*d₆*, 400 MHz), δ (ppm): 5.89(s, 1H), 5.23(s, 2H), 4.20 (m, 2H), 2.88 (s, 4H); ¹³C NMR (DMSO-*d₆*, 100 MHz), δ(ppm): 137.5, 118.7, 115.1, 74.2, 31.9; ¹⁹F NMR (DMSO-*d₆*, 376 MHz), δ(ppm): -88.3; ³¹P NMR ((DMSO-*d₆*, 160 MHz), δ(ppm): 46.5; HRMS(ESI⁺) m/z [M]⁺ calcd.for C₆H₉F₂O₂PS₂: 245.9750. found: 245.9721.
As a specific example, the method for preparing the polymerized monomer I-173' may include: (a) synthesizing 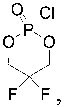 as shown above. (b) performing a substitution reaction on 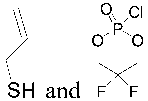 to give the polymerized monomer I-173', i.e., 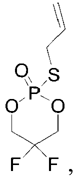 for the specific detail process, referring to the method for preparing the polymerized monomer I-192'. Characterizing and analyzing the prepared target product by methods such as ¹H NMR, ¹³C NMR, ¹⁹F NMR, ³¹P NMR, and HRMS, with the following results: ¹H NMR (DMSO-*d₆*, 400 MHz), δ (ppm): 5.96(s, 1H), 5.12(s, 1H), 5.03 (s, 1H), 3.85 (s, 4H), 3.23 (m, 2H); ¹³C NMR (DMSO-*d₆*, 100 MHz), δ(ppm): 132.7, 115.9, 113.7, 79.9, 21.0; ¹⁹F NMR (DMSO-*d₆*, 376 MHz), δ(ppm): -73.2; ³¹P NMR ((DMSO-*d₆*, 160 MHz), δ(ppm): 44.8; HRMS(ESI⁺) m/z [M]⁺ calcd.for C₆H₉F₂O₃PS: 229.9978. found: 229.9986

As a specific example, the method for preparing the polymerized monomer I-205' may include: (a) synthesizing 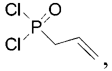 as shown above. (b) performing a substitution reaction on 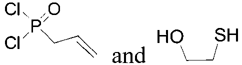 to give the polymerized monomer I-205', i.e., 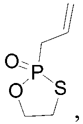 for the specific detail process, referring to the method for preparing the polymerized monomer I-12'. Characterizing and analyzing the obtained target product by methods such as ¹H NMR, ¹³C NMR, ³¹P NMR, and HRMS, with the following results: ¹H NMR (DMSO-*d₆*, 400 MHz), δ (ppm): 5.70(s, 1H), 5.03(s, 1H), 4.97 (s, 1H), 3.83(m, 2H), 2.75 (m, 2H), 2.0 (s, 2H); ¹³C NMR (DMSO-*d₆*, 100 MHz), δ(ppm): 132.7, 115.9, 79.7, 29.8, 23.5; ³¹P NMR ((DMSO-*d₆*, 160 MHz), δ(ppm): 43.3; HRMS(ESI⁺) m/z [M]⁺ calcd.for C₅H₉O₂PS: 164.0061. found: 164.0037.

As a specific example, the method of preparing the polymerized monomer I-229' may include: (a) synthesizing 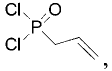 as shown above. (b) performing a substitution reaction on 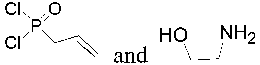 to give the polymerized monomer I-229', i.e., 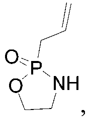 for the specific detail process, referring to the method for preparing the polymerized monomer I-12'. Characterizing and analyzing the obtained target product by methods such as ¹H NMR, ¹³C NMR, ³¹P NMR, and HRMS, with the following results: ¹H NMR (DMSO-*d₆*, 400 MHz), δ (ppm): 5.70(s, 1H), 5.03(s, 1H), 4.97 (s, 1H), 3.79(m, 2H), 2.84 (m, 2H), 2.0 (m, 3H); ¹³C NMR (DMSO-*d₆*, 100 MHz), δ(ppm): 132.7, 115.9, 79.6, 39.9, 29.7; ³¹P NMR ((DMSO-*d₆*, 160 MHz), δ(ppm): 42.6; HRMS(ESI⁺) m/z [M]⁺ calcd.for C₅H₁₀NO₂P: 147.0449. found: 147.0468.

In some embodiments of the present application, the method for preparing a cyclic phosphate compound having a double bond may further include: performing a sulfurization reaction on 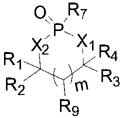 prepared by reaction formula I; and/or performing a sulfurization reaction on 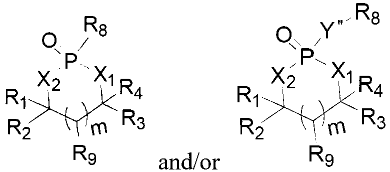 prepared by reaction formula II, for example, performing the sulfurization reaction with a tetrahydrofuran (THF) solution of a Lawesson reagent (2,4-bis(p-methoxyphenyl)-1,3-dithio-diphosphetane-2,4 sulfide) in a heating condition to give the polymerized monomer with the general formula of 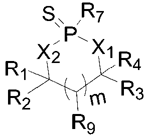 and/or give the polymerized monomer with the general formula of 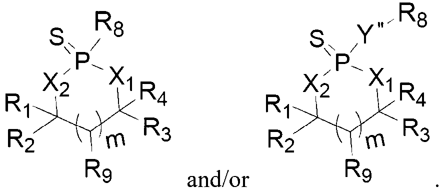 It may be understood with reference to the following reaction formulae:

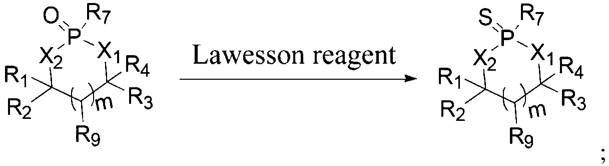

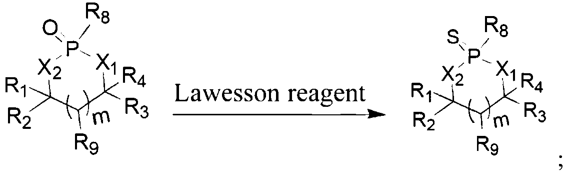

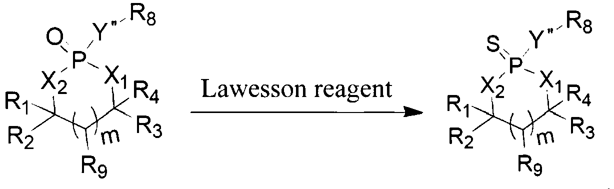

In some embodiments of the present application, the cyclic phosphate compound having a double bond may include one or more polymerized monomers, for example, may include at least one of the polymerized monomer I-12' of the polymer I-12, the polymerized monomer 1-49' of the polymer I-49, the polymerized monomer I-84 ' of the polymer I-84, the polymerized monomer I-108' of the polymer I-108, and the polymerized monomer I-192' of the polymer I-192.

In some embodiments of the present application, the self-polymerization of the cyclic phosphate compound having a double bond and/or the copolymerization of the cyclic phosphate compound having a double bond with the second polymerizable compound may be performed under the condition of an initiator, and the initiator may include at least one of azobisisobutyronitrile, azobisisoheptonitrile, 2,2"-azobis(2-imidazoline)dihydrochloride, 2,2'-azobisisobutylamidine dihydrochloride, benzoyl peroxide, t-butyl benzoyl peroxide, and methyl ethyl ketone peroxide, and the self-polymerization and/or copolymerization may be performed under the action of the initiator in a given range, which may facilitate the formation of a network polymer and may also control the polymerization rate and polymerization degree by adjusting the amount and conditions of the initiator, which is beneficial to obtaining a polymer within an expected molecular weight range. Optionally, the initiator may be used in an amount of 1wt%-10 wt%, for example, 2 wt%, 4 wt%, 6 wt%, 8 wt%, 10 wt%, or the like, based on the total mass of the cyclic phosphate compound having a double bond and the second polymerizable compound, or in a range formed by any of the above numerical values, and controlling the amount of the initiator within the given range may further improve the polymerization rate and the degree of polymerization, thereby further facilitating obtaining a polymer having an expected molecular weight range.

A third aspect of the present disclosure provides a gel polymer electrolyte, including a polymer matrix and an electrolytic solution, where the polymer matrix includes the polymer in the first aspect of the present application or the polymer obtained by the method in the second aspect of the present application. It may be understood that the electrolytic may include a solvent and a lithium salt. The solvent may be a non-aqueous solvent, and optionally the solvent may include a main solvent and an auxiliary solvent, where the main solvent may act to dissolve the lithium salt and increase the electrochemical stability of the electrolytic solution, and the auxiliary solvent may act to decrease the viscosity of the electrolytic solution, further increase the ionic conductivity, and the like. It should be noted that the features and effects described with respect to the polymer in the first aspect of the present the present application and the method for preparing a polymer in the second aspect of the present application are also applicable to the gel polymer electrolyte in the third aspect of the present application, which are not described herein again. In general, the gel polymer electrolyte may not only improve the thermal stability of the battery and reduce the probability of combustion and thermal runaway of the battery, but also alleviate the volume expansion induced during charge and discharge to some extent and improve the volume stability during cycling.

In some embodiments of the present application, the main solvent in the electrolytic solution may include, but is not limited to, one or more of an ester solvent, an ether solvent, a sulfone solvent, a nitrile solvent, and an ionic liquid solvent. The ester solvent may include, but is not limited to, one or more of ethylene carbonate (EC), propylene carbonate (PC), butylene carbonate (BC), vinylene carbonate (VC), ethylene sulfite (ES), propylene sulfite (PS), dimethyl sulfite (DMS), diethyl sulfite (DES), γ-butyrolactone (BL), dimethyl carbonate (DMC), diethyl carbonate (DEC), ethyl methyl carbonate (EMC), methyl propyl carbonate (MPC), methyl formate (MF), ethyl formate (EF), methyl acetate (MA), ethyl acetate (EA), ethyl propionate (EP), ethyl butyrate (EB), and the like, and fluoro derivatives thereof. The ether solvent may include, but is not limited to, one or more of dimethoxymethane (DMM), dimethoxyethane (DME), diethoxyethane (DEE), 1,2-dimethoxypropane (DMP), diethylene glycol dimethyl ether (DGM), tetrahydrofuran (THF), tetrahydropyran (THP), 1,3-dioxolane (DOL), 1,3-dioxane (1,3-DXA), 1,4-dioxane (1,4-DXA), and the like, and fluoro derivatives thereof. The sulfone solvent includes, but is not limited to, one or more of dimethyl sulfone, dimethyl sulfoxide, sulfolane, ethyl methyl sulfone, tetramethylene sulfoxide, ethyl methyl sulfoxide, diethyl sulfone, diethyl sulfoxide, methyl phenyl sulfone, methyl phenyl sulfoxide, ethyl phenyl sulfone, ethyl phenyl sulfoxide, vinyl phenyl sulfone, vinyl phenyl sulfoxide, and the like and fluoro derivatives thereof. By using the main solvent within the above given range, the dissolution of the lithium salt may be improved, so that the electrolytic solution has good ion transport performance.

In some embodiments of the present application, the auxiliary solvent in the electrolytic solution may be an insoluble lithium salt that is capable of being miscible with a main solvent well. In general, an electrolytic solution having a low lithium salt concentration has a low viscosity and a high conductivity, but has slightly poor electrochemical stability, and an electrolytic solution having a high concentration has high electrochemical stability because most of solvent molecules may be combined with Li⁺ to form a solvated shell structure. But the high viscosity and the low ion mobility due to the high concentration will result in a decrease in electrical properties of the electrolytic solution. The auxiliary solvent which does not dissolve the lithium salt but is well miscible with the main solvent is regarded as a diluent. The gel polymer electrolyte in the third aspect of the present application forms a locally high concentration electrolytic solution by adding a diluent into the high concentration electrolytic solution, which can not only retain the properties of the high concentration electrolytic solution, but also obtain the advantages of low viscosity and high ion conductivity of the low concentration electrolytic solution, i.e., the electrolytic solution may combine the advantages of the low concentration electrolytic solution and the high concentration electrolytic solution, so that it has high ion migration rate and good electrochemical stability, thereby further improving the dynamic performance of the battery.

In some embodiments of the present application, the auxiliary solvent in the electrolytic solution may include, but is not limited to, one or more of cyclohexane, benzene, toluene, p-xylene, m-xylene, o-xylene, fluorobenzene, p-difluorobenzene, m-difluorobenzene, o-difluorobenzene, benzotrifluoride, benzotrifluoride, trifluoromethoxybenzene, decafluoropentane, perfluoropentanone, 1,1,2,2-tetrafluoroethyl-2,2,3,3-tetrafluoropropyl ether, 1,2-bis(1,1,2,2-tetrafluoroethoxy)ethane, bis(2,2,2-trifluoroethyl)ether, 1,1,2,3,3,3-hexafluoropropyl ethyl ether, 1H, 1H, 5H-octafluoropentyl-1,1,2,2-tetrafluoroethyl ether, ethyl trifluoromethyl ether, difluoromethyl-2,2,3,3,3-pentafluoropropyl ether, heptafluoropropyl-1,2,2,2-tetrafluoroethyl ether, difluoromethyl-2,2,3,3-tetrafluoropropyl ether, perfluoroisopropyl methyl ether, 1,1,2,2-tetrafluoroethyl-2,2,2-trifluoroethyl ether, ethyl-1,1,2,2-tetrafluoroethyl ether, ethyl-2,2,2-tetrafluoroethyl ether, bis(1,1,2,2-tetrafluoroethyl)ether, and the like. Optionally, the auxiliary solvent in the electrolytic solution may include one or more of trifluoromethoxybenzene, 1,1,2,2-tetrafluoroethyl-2,2,3,3-tetrafluoropropyl ether, and 1,2-bis(1,1,2,2-tetrafluoroethoxy)ethane, and the auxiliary solvent in the given range has a high electrochemical window, good compatibility, and good capability of promoting the generation of fluorine-rich SEI, and the auxiliary solvent cooperates with the main solvent to not only improve the ionic conductivity and electrochemical stability of the electrolytic solution, but also reduce the side reaction between the electrolytic solution and the negative electrode sheet.

In some embodiments of the present application, the lithium salt in the electrolytic solution may include, but is not limited to, one or more of lithium bisfluorosulfonylimide (LiFSI), lithium hexafluorophosphate (LiPF₆), lithium tetrafluoroborate (LiBF₄), lithium hexafluoroarsenate (LiAsF₆), lithium bistrifluoromethanesulfonylimide (LiTFSI), lithium trifluoromethanesulfonate (LiOTF), lithium difluorophosphate (LiDFP), lithium bisoxalatoborate (LiBOB), lithium difluorooxalatoborate (LiDFOB), lithium difluorobisoxalatophosphate, and lithium tetrafluorooxalatophosphate, for example, optionally lithium bisfluorosulfonylimide, and the lithium salt may be decomposed on the surface of the negative electrode to form an inorganic fluorine-rich SEI component, and moreover, the lithium salt may have a better dissociation ability, so as to achieve a higher ion conductivity of the electrolytic solution and a lower viscosity of the electrolytic solution, thereby improving the electrochemical performance of the battery.

In some embodiments of the present application, the electrolytic solution may further include an initiator and a polymerized monomer of the polymer matrix, where the initiator is used for initiating polymerization of the polymerized monomer of the polymer matrix to form the polymer matrix. Optionally, additives also may be added into the electrolytic solution as required to achieve the expected effect, for example, an additive for suppressing the elution of the transition metal may be added, and/or an additive for promoting the film formation may be added. The additive promoting the film formation may include, but is not limited to, one or more of propane sultone, vinyl sulfate, vinyl sulfite, tris(trimethylsilyl)phosphate, tris (trimethylsilyl)phosphite, tris (trifluoroethyl) phosphate, tris(trifluoroethyl) phosphite, tris (trimethylsilyl)borate, dimethyl maleic anhydride, and butyl 1,4-diisocyanate. The additive in the given range is selected to further help improve the stability of the positive electrode and negative electrode and prolong the service life of the battery.

In some embodiments of the present application, the mass ratio of the polymer matrix in the gel polymer electrolyte may be 0.5wt%-25 wt%, for example, 1 wt%, 3 wt%, 5 wt%, 7 wt%, 9 wt%, 11 wt%, 13 wt%, 15 wt%, 17 wt%, 19 wt%, 21 wt%, 23 wt%, 25 wt%, or the like, or may be a range formed by any of the above numerical values. Optionally, the mass ratio of the polymer matrix in the gel polymer electrolyte may be 5wt%-25 wt%, further optionally 5wt%-12 wt%. With respect to the polymer composition used in the present application, if the mass ratio of the polymer matrix in the gel polymer electrolyte is too small, it is difficult to achieve better flame retardant property and effect of improving the thermal stability of the battery, and if the mass ratio of the polymer matrix is too large, polarization becomes large and ionic conductivity decreases easily, so that the cycle life of the battery is affected. By controlling the mass ratio of the polymer matrix in the gel polymer electrolyte within the given range, the electrochemical performance and thermal stability of the battery may be simultaneously considered, which is beneficial to reducing the probability of combustion and thermal runaway of the battery, and obtaining a longer service life of the battery.

A fourth aspect of the present application provides a battery, including the gel polymer electrolyte according to the third aspect of the present application, and/or the polymer obtained by using the method according to the second aspect of the present application, and/or the polymer according to the first aspect of the present application. Optionally, the battery may be a secondary battery, for example, the battery may be a lithium metal secondary battery or a lithium ion battery.

In some embodiments of the present application, when the battery is prepared, the forming process of the gel polymer electrolyte includes, but is not limited to, mixing the main solvent, the auxiliary solvent and the lithium salt of the gel polymer electrolyte, and the polymerized monomer and the initiator of the polymer matrix, injecting the obtained mixed solution into the battery cell for encapsulation; performing curing, for example, the curing operation may be maintained at 50-70°C for 8-12 h, so that the polymerized monomer is polymerized to form the polymer matrix; and then performing standing. When the polymer matrix in the battery is characterized, the battery may be disassembled, the obtained gel polymer electrolyte may be vacuum-dried to remove the solvent, washed to remove the lithium salt, dissolved with a proper amount of a good solvent, and finally precipitated and filtered with n-hexane to give the polymer matrix, and the structure of the polymer matrix may be characterized by combining common means such as infrared spectroscopy (IR), nuclear magnetic resonance (NMR, for example, ¹H, ¹³C, ¹⁹F, ³¹P, and the like), mass spectrometry (MS), elemental analysis, gel permeation chromatography (GPC), laser Raman spectroscopy (LR), and the like.

In some embodiments of the present application, the battery may include a positive electrode sheet, a negative electrode sheet, a separator, and the gel polymer electrolyte. During charge and discharge of the battery, active ions are intercalated and deintercalated back and forth between the positive electrode sheet and the negative electrode sheet. The separator is disposed between the positive electrode sheet and the negative electrode sheet to play a separating role. The gel polymer electrolyte functions to conduct ions between the positive electrode sheet and the negative electrode sheet.

### [Positive electrode sheet]

In the battery, the positive electrode sheet generally includes a positive electrode current collector and a positive electrode film layer disposed on the positive electrode current collector, and the positive electrode film layer includes a positive electrode active material. The positive electrode current collector may be a conventional metal foil or a composite current collector (a composite current collector may be formed by disposing a metal material on a polymer base material). As an example, the positive electrode current collector may be an aluminum foil.

In the present application, the specific type of the positive electrode active material is not limited, and a positive electrode material which can be used for a positive electrode of a secondary battery known in the art may be used, and persons skilled in the art may select the material according to actual requirements. For example, the positive electrode active material may include, but is not limited to, a positive electrode active material of a lithium-containing phosphate of a lithium transition metal oxide and/or olivine structure. The lithium transition metal oxide may include an undoped and/or optionally doped modified lithium transition metal oxide, and an uncoated and/or coated modified lithium transition metal oxide, and the lithium-containing phosphate of the olivine structure may include an undoped and/or optionally doped modified lithium-containing phosphate of the olivine structure and an uncoated and/or coated modified lithium-containing phosphate of the olivine structure. The positive electrode active materials within a given range may be obtained either by preparation or by commercial paths.

In some specific embodiments of the present application, the positive electrode active material may be selected from the lithium transition metal oxide. Optionally, the lithium transition metal oxide may include, but is not limited to, at least one or more of lithium cobalt oxide (e.g., LiCoO₂), lithium nickel oxide (for example, LiNiO₂), lithium manganese oxide (e.g., LiMnO₂, LiMn₂O₄, and the like), lithium nickel cobalt oxide, lithium nickel manganese cobalt oxide (e.g., LiNi_{1/3}Co_{1/3}Mn_{1/3}O₂ (NCM₃₃₃ for short), LiNi_{0.5}Co_{0.2}Mn_{0.3}O₂ (NCM₅₂₃ for short), LiNi_{0.5}Co_{0.25}Mn_{0.25}O₂ (NCM₂₁₁ for short), LiNi_{0.6}Co_{0.2}Mn_{0.2}O₂ (NCM₆₂₂ for short), LiNi_{0.8}Co_{0.1}Mn_{0.1}O₂ (NCM₈₁₁ for short), LiNi_{0.96}Co_{0.02}Mn_{0.02}O₂ (Ni₉₆ for short) and the like), lithium nickel cobalt aluminum oxide (e.g., LiNi_{0.85}Co_{0.15}Al_{0.05}O₂), modifying compounds thereof, and the like.

In some specific embodiments of the present application, the positive electrode active material may include the lithium-containing phosphate of the olivine structure, for example, the positive electrode active material may include, but is not limited to, at least one of lithium iron phosphate (e.g., LiFePO₄ (LFP for short)), a composite material of lithium iron phosphate and carbon, lithium manganese phosphate (e.g., LiMnPO₄), a composite material of lithium manganese phosphate and carbon, lithium ferric manganese phosphate, and a composite material of lithium ferric manganese phosphate and carbon.

In some specific embodiments of the present application, the positive electrode active material layer may further optionally include a binder, a conductive agent, and other optional auxiliary agents. As an example, the conductive agent may include one or more of superconducting carbon, acetylene black, carbon black, ketjen black, a carbon dot, a carbon nanotube, Super P (SP), graphene, and a carbon nanofiber. As an example, the binder may include, but is not limited to, one or more of styrene-butadiene rubber (SBR), water-based acrylic resin, polyvinylidene fluoride (PVDF), polytetrafluoroethylene (PTFE), ethylene-vinyl acetate copolymer (EVA), polyvinyl alcohol (PVA), and polyvinyl butyral (PVB).

### [Negative electrode sheet]

In the battery, the negative electrode sheet generally includes a negative electrode current collector and a negative electrode active material layer disposed on the negative electrode current collector, and the negative electrode active material layer includes a negative electrode active material. The negative electrode current collector may be a conventional metal foil or a composite current collector (for example, a metal material may be disposed on a polymer substrate to form a composite current collector). As an example, the negative electrode current collector may be a copper foil.

In some embodiments of the present application, the battery in the fourth aspect of the present application may be a lithium ion battery, and in this case, the specific type of the negative electrode active material is not limited, and an active material which can be used for a negative electrode of the battery known in the art may be used, and a person skilled in the art may select the material according to actual requirements. As an example, the negative electrode active material may include, but is not limited to, one or more of artificial graphite, natural graphite, hard carbon, soft carbon, a silicon-based material, or a tin-based material. Optionally, the silicon-based material may include one or more of elemental silicon, a silicon-oxygen compound (for example, silicon monoxide), a silicon-carbon composite, a silicon-nitrogen composite, and a silicon alloy. Further optionally, the tin-based material may include one or a plurality of elemental tin, a tin oxide compound, and a tin alloy. The negative electrode active material within the given range may be obtained either by preparation or by commercial paths.

In some embodiments of the present application, the negative electrode active material may include a silicon-based material, such as a composite negative electrode active material that may be doped with a silicon-based material and a carbon material, and the silicon-based material is used in the negative electrode active material layer to further increase the energy density of the battery, and optionally, the silicon content in the negative electrode active material may be not less than 10 wt%.

In some specific embodiments of the present application, the negative electrode active material layer may further optionally include a binder, a conductive agent, and other optional auxiliary agents. As an example, the conductive agent may include one or more of superconducting carbon, acetylene black, carbon black, ketjen black, a carbon dot, a carbon nanotube, graphene, and a carbon nanofiber. As an example, the binder may be one or more of styrene-butadiene rubber (SBR), water-based acrylic resin, polyvinylidene fluoride (PVDF), polytetrafluoroethylene (PTFE), an ethylene-vinyl acetate copolymer (EVA), polyvinyl alcohol (PVA), and polyvinyl butyral (PVB). As an example, other optional auxiliaries may include, but are not limited to, thickening and dispersing agents (for example, carboxymethylcellulose sodium CMC-Na), and PTC thermistor materials.

In some embodiments of the present application, the battery in the fourth aspect of the present application may be a lithium metal secondary battery, and in this case, the negative electrode material thereof may include, but is not limited to, elemental lithium metal. For example, the negative electrode material may also be an alloy formed by metallic lithium and other various metals or non-metallic elements, optionally, the metallic elements may include, but are not limited to, tin (Sn), zinc (Zn), aluminum (Al), magnesium (Mg), silver (Ag), gold (Au), gallium (Ga), indium (In), platinum (Pt), and the like, and further optionally, the non-metallic elements may include, but are not limited to, boron (B), carbon (C), silicon (Si), and the like.

In some embodiments of the present application, the battery in the fourth aspect of the present application may also be a negative electrode-less lithium metal battery, in which case, the negative electrode consists only of a metal foil current collector without lithium metal on its surface, and during cycling, only lithium in the positive electrode is used, and lithium metal precipitates and peels off on the negative electrode side.

In some embodiments of the present application, the separator in the battery may include, but is not limited to, a polyethylene porous film, a polypropylene porous film, a polyimide porous film, and a porous film formed by compounding a plurality of polymers.

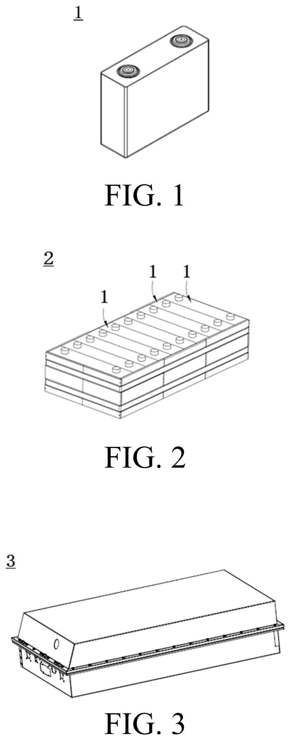

In some embodiments of the present application, the shape of the battery in the fourth aspect of the present application is not particularly limited, and may be flexibly selected by a person skilled in the art according to actual requirements, for example, may be cylindrical, square (understood with reference to FIG. 1), or in any other shape.

In some embodiments of the present application, the battery may include an outer package for encapsulating the positive electrode sheet, the negative electrode sheet, the separator, and the electrolyte.

In some embodiments, the outer package may include a housing, and a cover plate. The housing may include a bottom plate and side plates connected to the bottom plate, and the bottom plate and the side plates may define an accommodating chamber. The housing has an opening communicating with the accommodation chamber, and the cover plate can cover the opening to close the accommodation chamber.

In some embodiments, the positive electrode sheet, the negative electrode sheet, and the separator may be manufactured into the electrode assembly through a winding process or a lamination process. The electrode assembly is encapsulated within the accommodation chamber. The electrolyte may be a gel polymer electrolyte in which an electrolytic solution is impregnated in the electrode assembly. The battery may have one or more electrode assemblies, and the number may be adjusted as needed.

In some embodiments, the outer package of the battery may be a hard shell, and the hard shell may be a metal shell or a non-metal shell such as a hard plastic shell, an aluminum case, a steel case, and the like.

In some embodiments, the outer package of the battery may also be a pouch, such as a bag-type pouch. The material of the pouch may include a plastic, for example, one or more of polypropylene (PP), polybutylene terephthalate (PBT), and polybutylene succinate (PBS), and the like, and for further example, may be an aluminum plastic film, and the like.

In some embodiments of the present application, the battery may be either a battery cell 1 (understood with reference to FIG. 1) or a battery module 2 (understood with reference to FIG. 2) or a battery pack 3 (understood with reference to FIG. 3) composed of the battery cell 1.

In some embodiments, the battery may be the battery module. The battery module may include one or more battery cells, and the specific number of the battery cells may be adjusted according to application and capacity of the battery module. FIG. 2 shows a battery module 2 as an example. Referring to FIG. 2, in the battery module 2, a plurality of battery cells 1 may be arranged sequentially in the length direction of the battery module 2. Certainly, the secondary batteries may alternatively be arranged in any other manner. Further, the plurality of battery cells 1 may be fastened by using fasteners. Optionally, the battery module 2 may further include a housing having an accommodating space in which the plurality of battery cells 1 are accommodated.

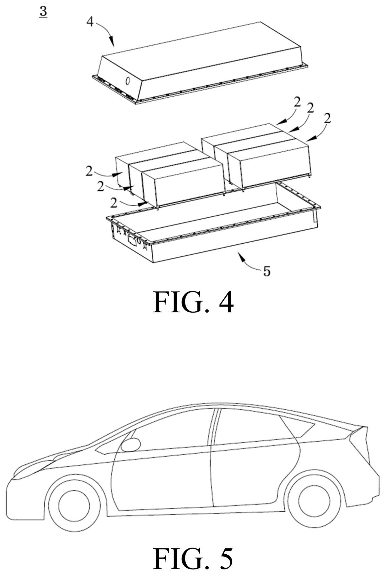

In some embodiments, the above battery module may be further assembled into a battery pack. The number of battery modules contained in the battery pack may be adjusted according to application and capacity of the battery pack. Referring to FIG. 3 or FIG. 4 (FIG. 3 and FIG. 4 show a battery pack 3 as an example), a battery case and a plurality of battery modules 2 disposed in the battery case may be included in the battery pack 3. The battery case may include an upper case body 4 and a lower case body 5, the upper case body 4 being capable of covering the lower case body 5 and forming a closed space for accommodating the battery module 2. The plurality of battery modules 2 may be arranged in any manner in the battery case.

In addition, the present application further provides an electrical device, including the battery in the fourth aspect of the present application. The battery, for example, the battery cell, the battery module or the battery pack may be used as a power source or an energy storage unit of the electrical device. The electrical device may include, but is not limited to, a mobile device (e.g., a mobile phone or a notebook computer), an electric vehicle (e.g., a battery electric vehicle, a hybrid electric vehicle, a plug-in hybrid electric vehicle, an electric bicycle, an electric scooter, an electric golf cart, or an electric truck), an electric train, ship, or satellite, or an energy storage system. Referring to FIG. 5, it is understood that as a specific example, the electrical device may be a vehicle. For the electrical device, the specific type of the battery may be selected according to its use requirements, for example, the battery cell, the battery module or the battery pack may be selected.

As an example, the electrical device is a pure electric vehicle, a hybrid electric vehicle, or a plug-in hybrid electric vehicle. In order to meet the demand for high power and high energy density of the secondary battery by the electrical device, a battery pack or a battery module may be used.

As another example, the electrical device may be a mobile phone, a tablet computer, and a notebook computer. Generally, the electrical device is light and thin, and may use a battery as a power source.

Embodiments of the present application are described below. The example described below are illustrative only and are not to be construed as limiting the present application. In the embodiments, specific techniques or conditions are not indicated, and they are performed according to techniques or conditions described in documents in the art or according to the specification of the product. The reagents or instruments used without specifying the manufacturer(s) are conventional products that are commercially available.

### Example 1

### (1) Preparation of a positive electrode sheet

A positive electrode active material lithium nickel cobalt manganese oxide LiNi_{0.8}Co_{0.1}Mn_{0.1}O₂ (NCM811), a conductive agent acetylene black, and a binder PVDF were mixed at a mass ratio of 98: 1: 1, a solvent N-methylpyrrolidone (NMP) was added, and the mixture was stirred until the system became uniform to give a positive electrode slurry (solid content: 70 wt%); and the positive electrode slurry was uniformly coated on both sides on a positive electrode current collector aluminum foil at a loading capacity of about 25 mg/cm², dried at room temperature, transferred to an oven and further dried, and then cut into a 40 mm×50 mm rectangle to obtain a positive electrode sheet with a positive electrode surface capacity of 3.5 mAh/cm².

### (2) Preparation of a negative electrode sheet

A lithium foil having a thickness of 50 µm was laminated with a copper foil having a thickness of 12 µm by a roll press method, and then was cut into a rectangule of 41 mm×51 mm for later use as a negative electrode sheet.

### (3) Preparation of a gel polymer electrolyte:

1.0 g of the main solvent 1, 2-dimethoxyethane (DME), 6.4 g of the auxiliary solvent 1,1,2,2-tetrafluoroethyl-2,2,3,3-tetrafluoropropyl ether (TTE), and 1.5 g of the lithium salt lithium bisfluorosulfonylimide were mixed to form an electrolytic solution with a concentration of 1.5 M, and 0.9 g of the polymerized monomer 1-12' and 16.9 mg of the initiator azobisisoheptonitrile were added (after liquid injection and encapsulation, the mixture was cured at 60°C for 12 h to prepare the poly gel electrolyte).

### (4) Preparation of a separator

A polyethylene porous membrane having a thickness of 12 µm was cut into a rectangle of 45 mm×55 mm for later use as a separator.

### (5) Preparation of a secondary battery

Battery assembly: one piece of cut positive electrode and two pieces of cut negative electrodes were taken to match, the positive electrode and negative electrode were isolated by using the above separator, and the positive electrode and negative electrode were wrapped in an aluminum plastic film bag to form a laminated dry battery cell. 0.3 g of the electrolytic solution prepared as described above was injected, and the aluminum plastic film bag was subjected to vacuum hot pressing encapsulation. After standing at room temperature for at least 6 h, a cycle test might be started. The rated capacity of the laminated battery had a rated capacity of 140 mAh.

### Comparative example 1

The difference from Example 1 is that the gel polymer electrolyte is replaced by a liquid electrolyte.

1.0 g of the main solvent 1, 2-dimethoxyethane (DME), 6.4 g of the auxiliary solvent 1,1,2,2-tetrafluoroethyl-2,2,3,3-tetrafluoropropyl ether (TTE), and 1.5 g of the lithium salt lithium bisfluorosulfonylimide were mixed to form an electrolytic solution with the concentration of 1.5 M.

### Comparative example 2

The difference from Example 1 is that the type of the polymerized monomer added is different when the gel polymer electrolyte is prepared.

(3) Preparation of a gel polymer electrolyte: 1.0 g of the main solvent 1, 2-dimethoxyethane (DME), 6.4 g of the auxiliary solvent 1,1,2,2-tetrafluoroethyl-2,2,3,3-tetrafluoropropyl ether (TTE), and 1.5 g of lithium salt lithium bisfluorosulfonylimide were mixed to form an electrolytic solution with the concentration of 1.5 M, and 0.9 g of methyl acrylate and 16.9 mg of the initiator azobisisoheptonitrile were then added.

### Comparative examples 3-5:

The difference from Comparative example 2 is that the type of the second polymerizable monomer added is different when the gel polymer electrolyte is prepared.

The second polymerizable monomers used in Comparative example 3, Comparative example 4, and Comparative example 5 are vinylene carbonate, hexafluoroisopropyl methacrylate, and hydroxyethyl methacrylate in sequence, and the details are shown in Table 1.

### Examples 2-5

The difference from Example 1 is that the type of the polymerized monomer added is different when the gel polymer electrolyte is prepared, the polymerized monomers used in Example 2, Example 3, Example 4, and Example 5 are I-49', I-192', 1-84', and I-108' in sequence, and the details are shown in Table 1.

### Example 6

### The difference from Example 1 is that

(3) Preparation of a gel polymer electrolyte: 1.0 g of the main solvent 1, 2-dimethoxyethane (DME), 6.4 g of the auxiliary solvent 1,1,2,2-tetrafluoroethyl-2,2,3,3-tetrafluoropropyl ether (TTE), and 1.5 g of lithium salt lithium bisfluorosulfonylimide were mixed to form an electrolytic solution with the concentration of 1.5 M, and 0.45 g of the polymerized monomer 1-12', 0.45 g of the polymerized monomer 1-108', and 20 mg of the initiator azobisisoheptonitrile were then added.

### Example 7

### The difference from Example 1 is that

(3) Preparation of a gel polymer electrolyte: 1.0 g of the main solvent 1, 2-dimethoxyethane (DME), 6.4 g of the auxiliary solvent 1,1,2,2-tetrafluoroethyl-2,2,3,3-tetrafluoropropyl ether (TTE), and 1.5 g of lithium salt lithium bisfluorosulfonylimide were mixed to form an electrolytic solution with the concentration of 1.5 M, and 0.45 g of the polymerized monomer I-84', 0.45 g of the polymerized monomer I-192', and 20 mg of the initiator azobisisoheptonitrile were then added.

### Example 8

### The difference from Example 1 is that

(3) Preparation of a gel polymer electrolyte: 1.0 g of the main solvent 1, 2-dimethoxyethane (DME), 6.4 g of the auxiliary solvent 1,1,2,2-tetrafluoroethyl-2,2,3,3-tetrafluoropropyl ether (TTE), and 1.5 g of lithium salt lithium bisfluorosulfonylimide were mixed to form an electrolytic solution with the concentration of 1.5 M, and 0.45 g of the polymerized monomer 1-12', 0.45 g of the second polymerizable monomermethyl acrylate, and 20 mg of the initiator azobisisoheptonitrile were then added.

### Examples 9-11

The difference from Example 8 is that the type of the second polymerizable monomer added is different when the gel polymer electrolyte is prepared.

The second polymerizable monomers used in Example 9, Example 10, and Example 11 are vinylene carbonate, hexafluoroisopropyl methacrylate, and hydroxyethyl methacrylate in sequence, and the details are shown in Table 1.

### Examples 12-18

The difference from Example 1 is that the kind of the polymerized monomer added is different when the gel polymer electrolyte is prepared, and the polymerized monomers used in Examples 12 to 18 are the polymerized monomers I-60', I-125', I-137', I-149', I-173', 1-205', and 1-229' of the polymers 1-60, 1-125, 1-137, 1-149, 1-173, 1-205, and I-229, and the details are shown in Table 1.

### Example 19

### The difference from Example 1 is that

(3) Preparation of a gel polymer electrolyte: 1.0 g of the main solvent 1, 2-dimethoxyethane (DME), 6.4 g of the auxiliary solvent 1,1,2,2-tetrafluoroethyl-2,2,3,3-tetrafluoropropyl ether (TTE), and 1.5 g of lithium salt lithium bisfluorosulfonylimide were mixed to form an electrolytic solution with the concentration of 1.5 M, and 0.089 g of the polymerized monomer I-12' and 6.0 mg of the initiator azobisisoheptonitrile were then added.

### Example 20

### The difference from Example 1 is that

(3) Preparation of a gel polymer electrolyte: 1.0 g of the main solvent 1, 2-dimethoxyethane (DME), 6.4 g of the auxiliary solvent 1,1,2,2-tetrafluoroethyl-2,2,3,3-tetrafluoropropyl ether (TTE), and 1.5 g of lithium salt lithium bisfluorosulfonylimide were mixed to form an electrolytic solution with the concentration of 1.5 M, and 0.445 g of the polymerized monomer I-12' and 6.0 mg of the initiator azobisisoheptonitrile were then added.

### Example 21

### The difference from Example 1 is that

(3) Preparation of a gel polymer electrolyte: 1.0 g of the main solvent 1, 2-dimethoxyethane (DME), 6.4 g of the auxiliary solvent 1,1,2,2-tetrafluoroethyl-2,2,3,3-tetrafluoropropyl ether (TTE), and 1.5 g of lithium salt lithium bisfluorosulfonylimide were mixed to form an electrolytic solution with the concentration of 1.5 M, and 1.335 g of the polymerized monomer I-12' and 31.0 mg of the initiator azobisisoheptonitrile were then added.

### Example 22

### The difference from Example 1 is that

(3) Preparation of a gel polymer electrolyte: 1.0 g of the main solvent 1, 2-dimethoxyethane (DME), 6.4 g of the auxiliary solvent 1,1,2,2-tetrafluoroethyl-2,2,3,3-tetrafluoropropyl ether (TTE), and 1.5 g of lithium salt lithium bisfluorosulfonylimide were mixed to form an electrolytic solution with the concentration of 1.5 M, and 2.225 g of the polymerized monomer I-12' and 31.0 mg of the initiator azobisisoheptonitrile were then added.

It should be noted that the above embodiments of the present application exemplarily provide several methods for preparing a gel polymer electrolyte. Other gel polymer electrolytes may be prepared with reference to this exemplary method. According to the exemplified preparation method of the compound, those skilled in the art may easily obtain a specific method for carrying out respective synthetic steps from relevant scientific literature or standard textbooks in the field. A compound commercially available or known in the literature is used as a raw material for the synthesis, unless specified otherwise. Those skilled in the art of organic synthesis would recognize that the nature and order of the proposed synthetic steps may be varied to optimize the generation of the compound described herein. In addition, raw materials, reagents, and the like whose sources are not specified in the production process all are commercially available conventional products.

### Performance tests:

### 1. Characterization of the polymer matrix in the gel polymer electrolyte obtained

The electrolytic solution obtained in the preparation of the gel polymer electrolyte in step (3) was mixed with the polymerized monomer and the initiator, then the mixture was cured at 60° C for 12 h, followed by vacuum drying to remove the solvent, and the mixture was washed to remove the lithium salt, dissolved with an appropriate amount of a good solvent, and finally precipitated and filtered with n-hexane to obtain a polymer matrix. The obtained polymer matrix is characterized in combination with one or more of infrared spectroscopy (IR), nuclear magnetic resonance (NMR, e.g., ¹H or ¹³C or ¹⁹F or ³¹P), mass spectrometry (MS), elemental analysis, gel permeation chromatography (GPC), laser Raman spectroscopy (LR).

### 2. A nail penetration test for a secondary battery

The following steps were performed in a 25° C environment: the second battery was charged to 4.3 V at 0.2 C and charged to 0.05 C at a constant voltage of 4.3V; and a high-temperature-resistant steel needle with the diameter of 3 mm was used to penetrate the geometric center of the cell at a speed of 25 mm/s, the steel needle remained in the cell, and the state of heat generation at that time was observed. Five parallel test groups were provided for each example, and the maximum temperature reached was measured by a thermocouple mounted on the surface of each cell at a distance of 2 cm from the nail penetration point, and the average value of the five parallel test groups was measured.

The polymer matrices obtained in Examples 1-22 were characterized, the characteristic functional groups in the polymer were identified by nuclear magnetic resonance spectroscopy (NMR, for example, ¹H NMR and ¹⁹F NMR) and infrared spectroscopy (IR), the polymer structure was identified by elemental analysis, and the characterization results showed that the polymer matrices obtained by polymerization of the polymerized monomers in Examples 1-22 under the condition of the initiator had the structure shown in formula I or formula II of the present application.

The secondary batteries prepared in Examples 1-22 and Comparative examples 1-5 were subjected to a nail penetration test under the same conditions, and the test results are shown in Table 1.

**Table 1 Differences and test results of Examples 1-22 and Comparative examples 1-5**

| Polymer monomers of the polymer matrix | | | | Mass ratio of the polymerized monomer in the gel polymer electrolyte raw material | Temperature achieved during needle penetration/° C |
|---|---|---|---|---|---|
| | Cyclic phosphate compound containing a double bond | Second polymerizable monomer | Mass ratio of the cyclic phosphate compound containing a double bond to the second polymerizable monomer | | |
| Example 1 | I-12' | / | / | 9.2 wt% | 24 |
| Comparative example 1 | / | / | / | / | Failure |
| Comparative example 2 | / | Methyl acrylate | / | 9.2 wt% | 46 |
| Comparative example 3 | / | Vinylene carbonate | / | 9.2 wt% | 48 |
| Comparative example 4 | / | Hexafluoroisopropyl methacrylate | / | 9.2 wt% | 40 |
| Comparative example 5 | / | Hydroxyethyl methacrylate | / | 9.2 wt% | 43 |
| Example 2 | I-49' | / | / | 9.2 wt% | 28 |
| Example 3 | I-192' | / | / | 9.2 wt% | 25 |
| Example 4 | I-84' | / | / | 9.2 wt% | 24 |
| Example 5 | I-108' | / | / | 9.2 wt% | 32 |
| Example 6 | I-12', I-108' | / | / | 9.2 wt% | 27 |
| Example 7 | I-84', I-192' | / | / | 9.2 wt% | 24 |
| Example 8 | I-12' | Methyl acrylate | 1:1 | 9.2 wt% | 34 |
| Example 9 | I-12' | Vinylene carbonate | 1:1 | 9.2 wt% | 36 |
| Example 10 | I-12' | Hexafluoroisopropyl methacrylate | 1:1 | 9.2 wt% | 30 |
| Example 11 | I-12' | Hydroxyethyl methacrylate | 1:1 | 9.2 wt% | 32 |
| Example 12 | I-60' | / | / | 9.2 wt% | 27 |
| Example 13 | I-125' | / | / | 9.2 wt% | 23 |
| Example 14 | I-137' | / | / | 9.2 wt% | 24 |
| Example 15 | I-149' | / | / | 9.2 wt% | 28 |
| Example 16 | I-173' | / | / | 9.2 wt% | 26 |
| Example 17 | I-205' | / | / | 9.2 wt% | 30 |
| Example 18 | I-229' | / | / | 9.2 wt% | 35 |
| Example 19 | I-12' | / | / | 3 wt% | 30 |
| Example 20 | I-12' | / | / | 7 wt% | 27 |
| Example 21 | I-12' | / | / | 15 wt% | 24 |
| Example 22 | I-12' | / | / | 19.76 wt% | 23 |

| | | | | | |
|---|---|---|---|---|---|
| Note: the polymerized monomers I-12', 1-49', 1-192', 1-84', 1-108', 1-60', 1-125', 1-137', 1-149', I-173', I-205', and 1-229' used in Examples 1-22 were obtained by the preparation method disclosed in the present application; methyl acrylate CAS: 96-33-3, MACKLIN, purity: 99%; vinylene carbonate CAS: 872, 36-6, HEOWNS, purity: 99%; hexafluoroisopropyl methacrylate CAS: 3063, 94-3, MERYER, purity: 99%; hydroxyethyl methacrylate CAS: 868, 77-9, ALADDIN, purity: 99%. | | | | | |

### Results and Discussion:

It may be seen from the combination of Examples 1-22 and Comparative examples 1-5 that the use of the polymer having the cyclic phosphate structure in the electrolytic solution contributes to the improvement of the thermal stability of the battery and the reduction of the probability of combustion and thermal runaway of the battery. In addition, it may also be known from the combination of Examples 1-5 and Examples 12-18 that in the cyclic phosphate polymer, compared with X₁ and X₂ which are sulfur or imino, when X₁ and X₂ are oxygen, the thermal stability of the battery is favorably improved; compared with Y which is sulfur or imino, when Y is alkyl or alkoxyl, the thermal stability of the battery is favorably improved; and it may be known from the combination of Example 2 and Example 12 that compared with no structure substituted with fluorine, when fluoro-substitution exists in the cyclic phosphate polymer, the thermal stability of the battery is favorably improved. In addition, it may further be known from the combination of Example 1 and Examples 19-22 that with the increase of the content of the polymer matrix in the gel polymer electrolyte, the thermal stability of the battery is improved therewith.

Finally, it should be noted that the above embodiments are only for the purpose of illustrating the technical solutions of the present application and are not to be construed as limiting the present application. Although the present application has been described in detail with reference to the above embodiments, it should be understood by a person of ordinary skill in the art that modifications may be made to the technical solutions described in the above embodiments, or equivalent replacement may be made to some or all of the technical features thereof. However, the modifications or replacements do not make the nature of corresponding technical solutions depart from the scope of the technical solutions of the embodiments of the present application, all of which shall fall within the scope of the claims and the description of the present application. In particular, the technical features mentioned in the embodiments may be combined in any manner provided that there is no structural conflict. The present application is not limited to the specific embodiments disclosed herein, but includes all technical solutions falling within the scope of the claims.

## Claims

1. A polymer, having a general formula as shown in formula I: 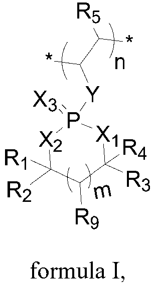
wherein m comprises 0 and/or 1; n is a positive integer; X₁ and X₂ each independently comprise oxygen, sulfur or imino; X₃ comprises oxygen or sulfur;
Y comprises any one of oxygen, sulfur, imino, -S-C₁₋₈ alkylene unsubstituted or substituted with any group, -NH-C₁₋₈ alkylene unsubstituted or substituted with any group, C₁₋₈ alkylene unsubstituted or substituted with any group, and C₁₋₈ alkoxylene unsubstituted or substituted with any group; R₁, R₂, R₃, and R₄ each independently comprise any one of hydrogen, fluorine, C₁₋₁₀ alkyl unsubstituted or substituted with any group, and C₁₋₁₀ alkoxyl unsubstituted or substituted with any group; R₅ comprises any one of C₁₋₁₀ alkyl unsubstituted or substituted with any group and 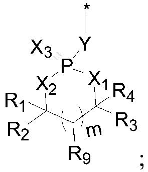 and R₉ comprises C₁₋₁₀ alkyl unsubstituted or substituted with any group; and the any group comprises at least one of halogen, alkyl, alkoxyl, an ester group, and carbonyl.

2. The polymer according to claim 1, wherein the halogen comprises fluorine.

3. The polymer according to claim 2, wherein X₁ and X₂ each independently comprise oxygen or sulfur; Y comprises any one of oxygen, C₁₋₈ alkylene unsubstituted or substituted with fluorine, and C₁₋₈ alkoxylene unsubstituted or substituted with fluorine; R₁, R₂, R₃, and R₄ each independently comprise any one of hydrogen, fluorine, C₁₋₁₀ alkyl unsubstituted or substituted with fluorine, and C₁₋₁₀ alkoxyl unsubstituted or substituted with flurione; R₅ comprises any one of C₁₋₁₀ alkyl unsubstituted or substituted with fluorine and 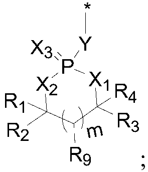 and R₉ comprises C₁₋₁₀ alkyl unsubstituted or substituted with fluorine.

4. The polymer according to claim 3, wherein X₁ and X₂ each independently comprise oxygen; X₃ comprises oxygen; and Y comprises any one of oxygen, C1-8 alkylene unsubstituted or substituted with fluorine, and C1-8 alkoxylene unsubstituted or substituted with fluorine.

5. The polymer according to any one of claims 1-4, wherein an average molecular weight is 20,000-60,000.

6. The polymer according to any one of claims 1-5, wherein R₁, R₂, R₃, and R₄ each independently comprise any one of C1-10 alkyl unsubstituted or substituted with fluorine, and C1-10 alkoxyl unsubstituted or substituted with fluorine.

7. The polymer according to any one of claims 1-6, wherein a polymerized monomer of the polymer comprises a cyclic phosphate compound having a double bond.

8. The polymer according to any one of claims 1-7, wherein the polymerized monomer is a cyclic phosphate compound having a double bond.

9. The polymer according to any one of claims 1-8, wherein the polymerized monomer comprises:

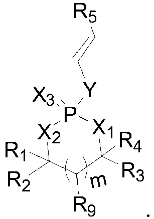

10. The polymer according to any one of claims 1-9, wherein the polymer comprises at least one of the following compounds:

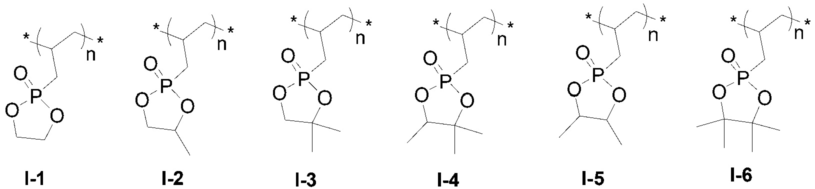

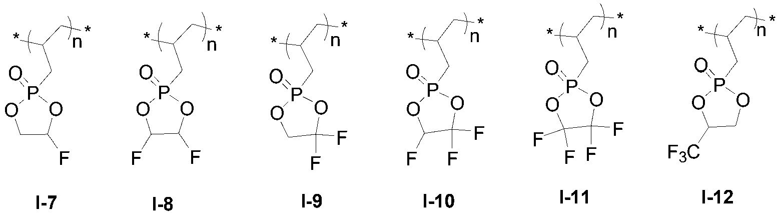

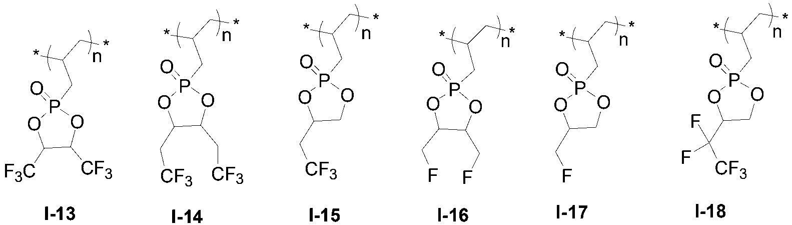

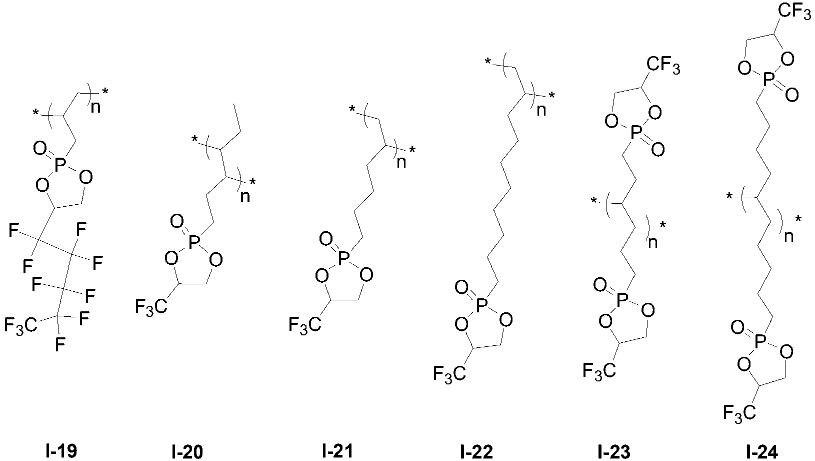

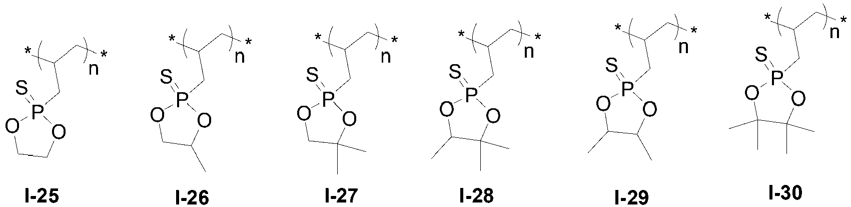

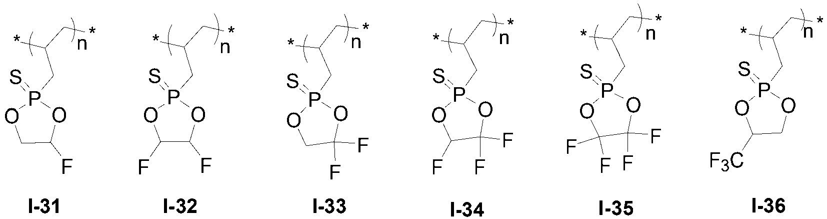

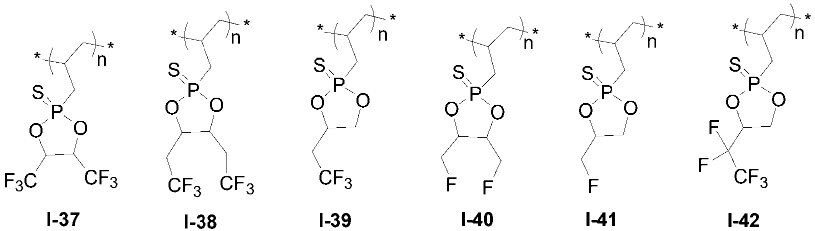

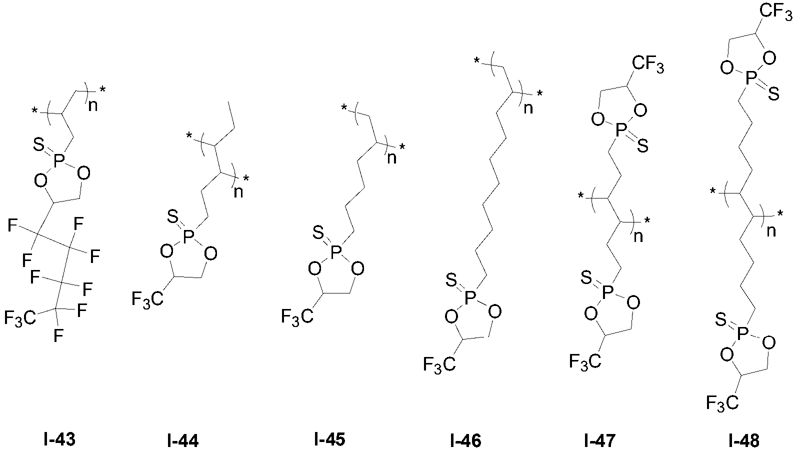

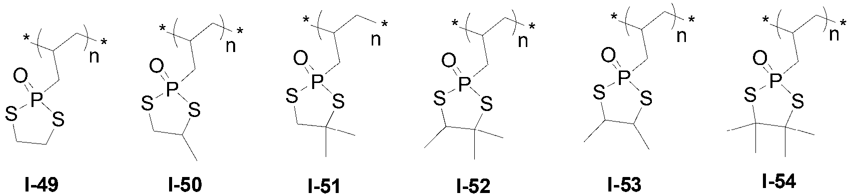

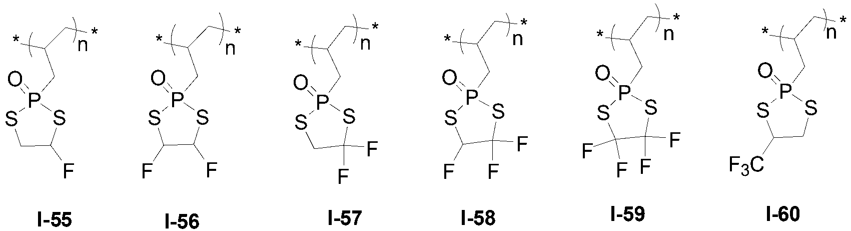

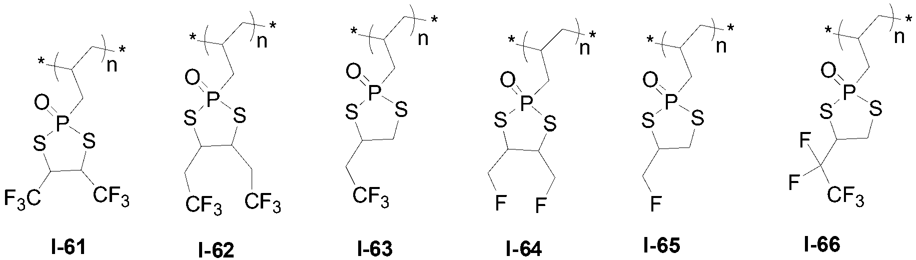

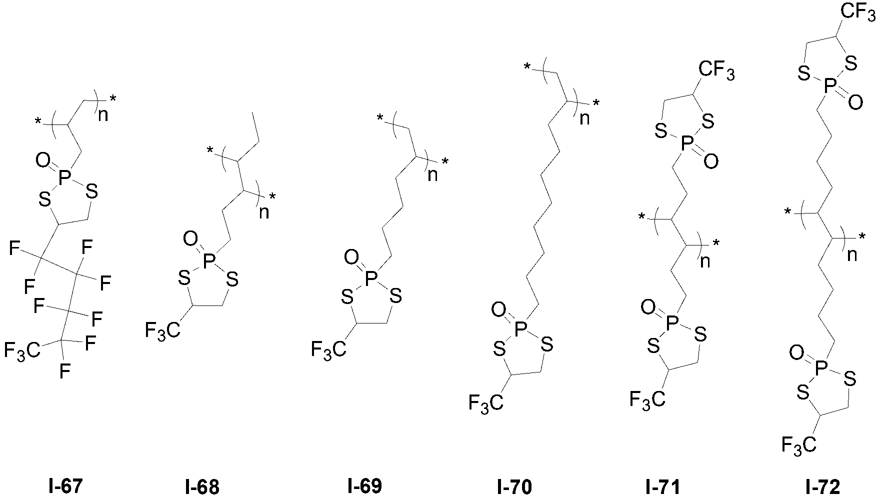

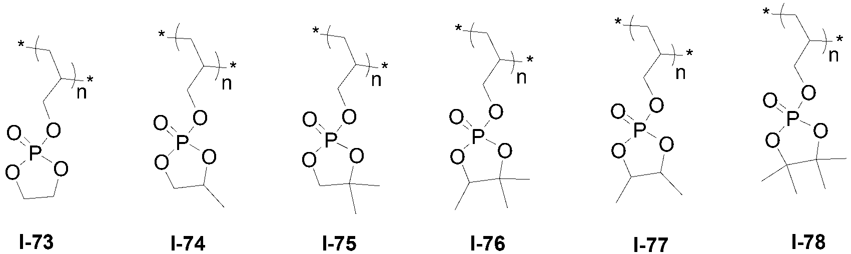

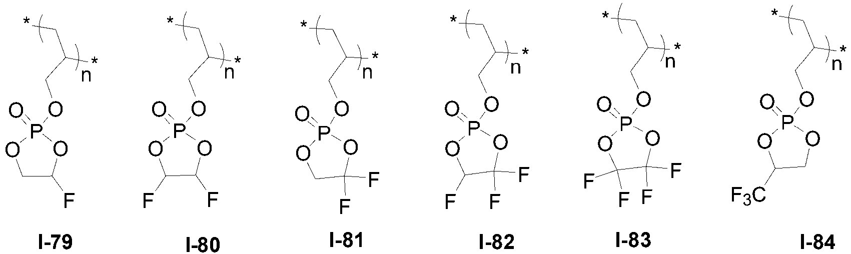

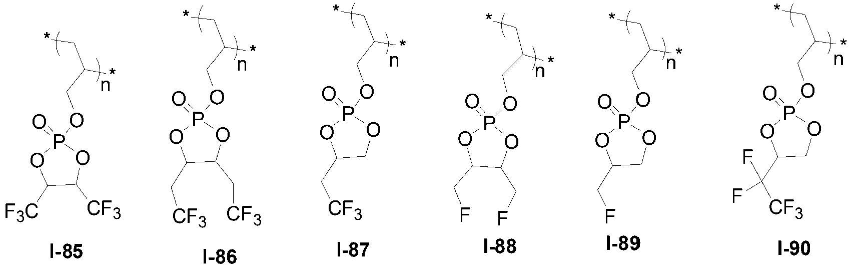

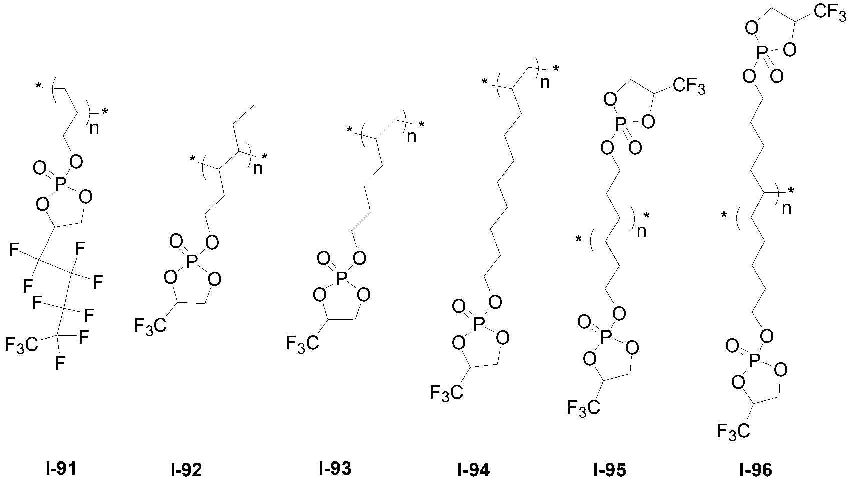

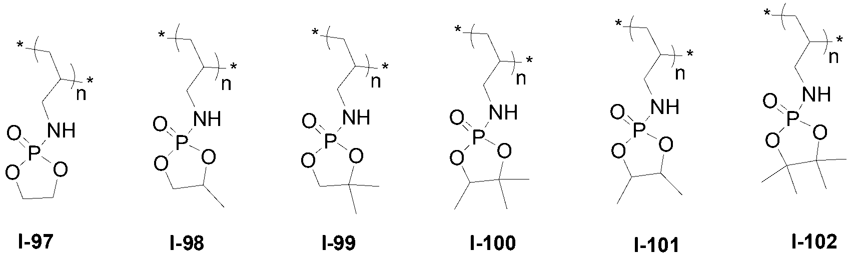

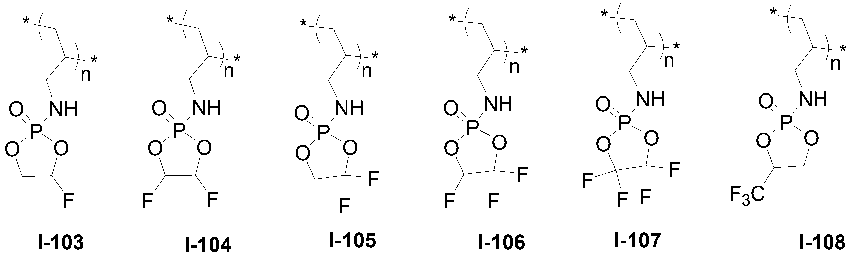

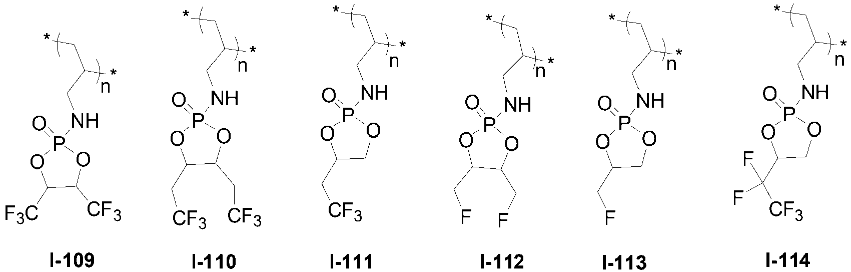

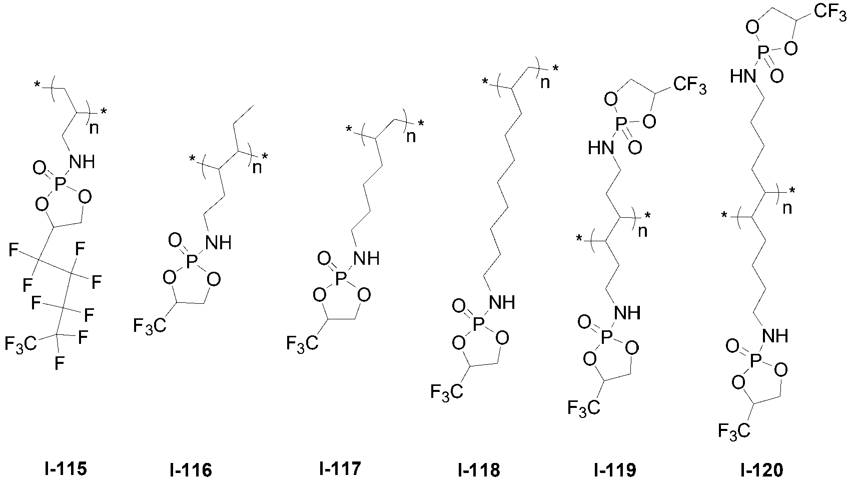

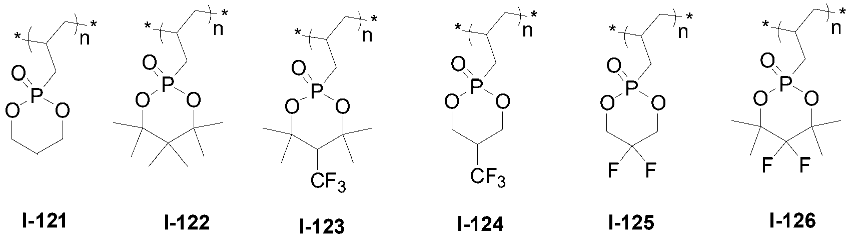

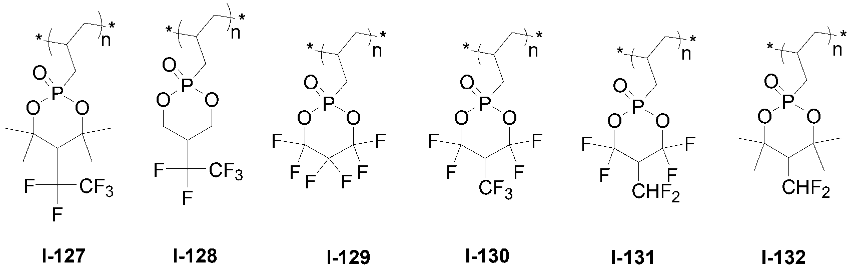

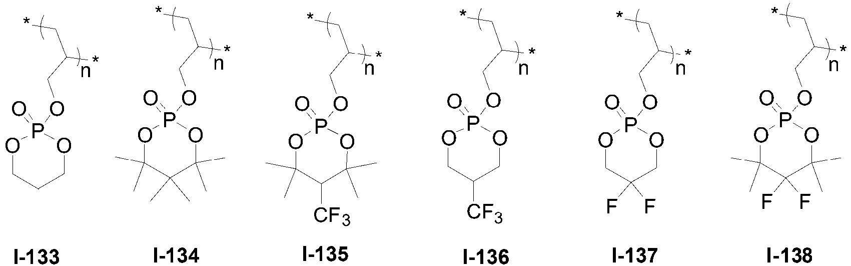

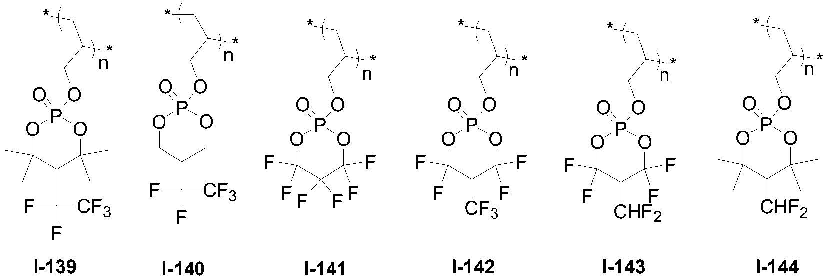

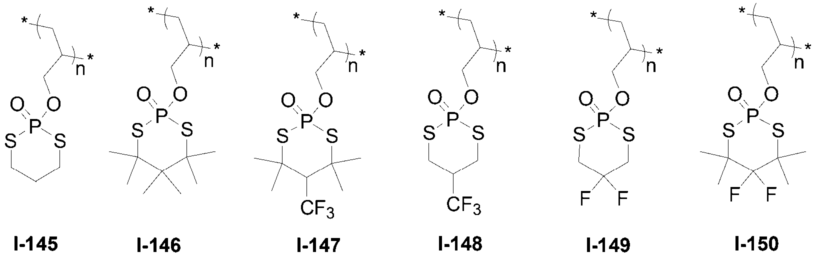

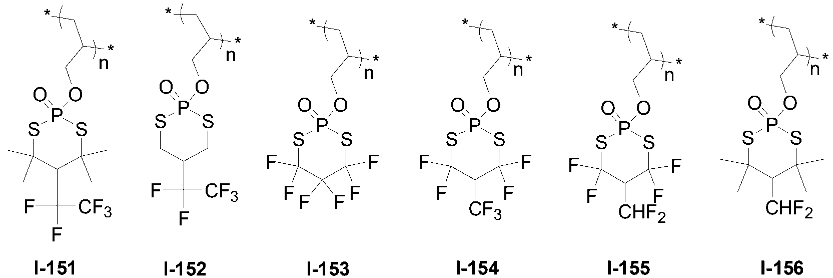

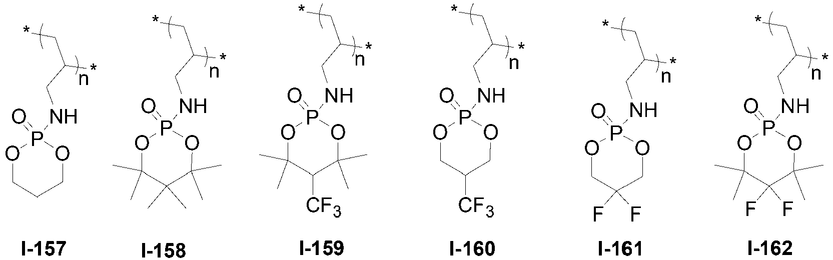

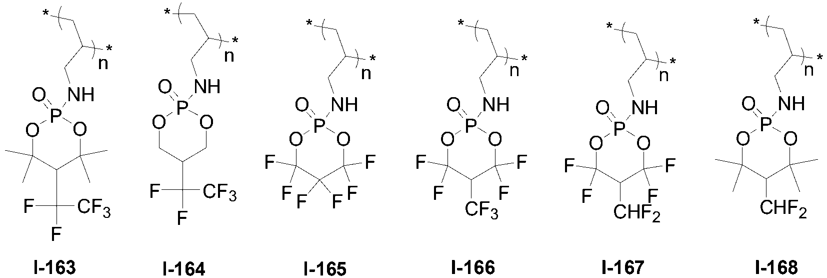

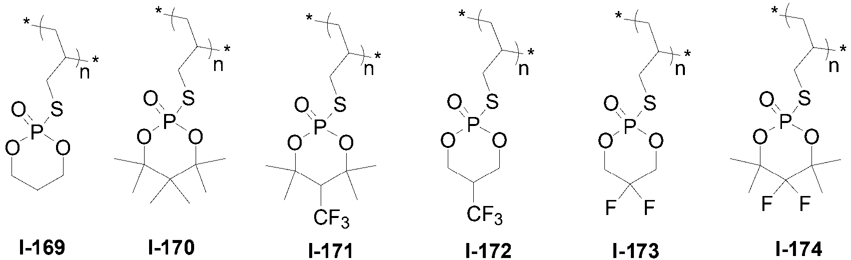

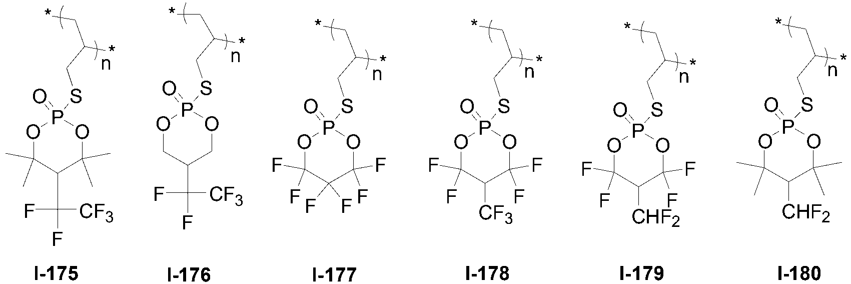

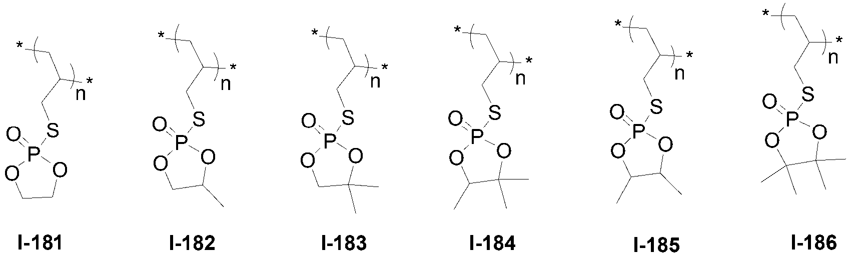

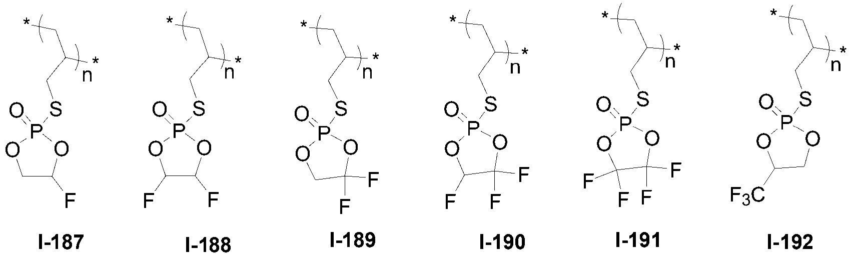

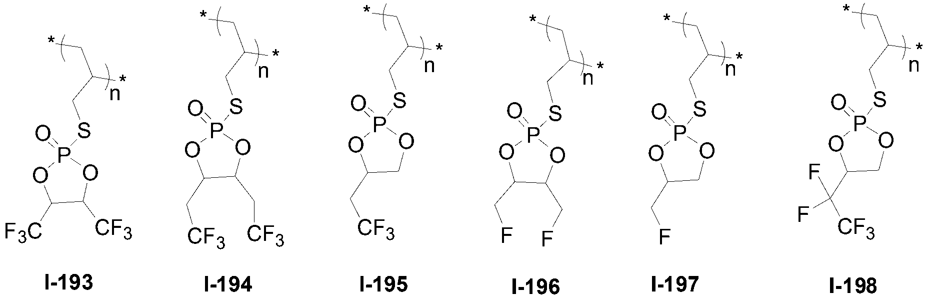

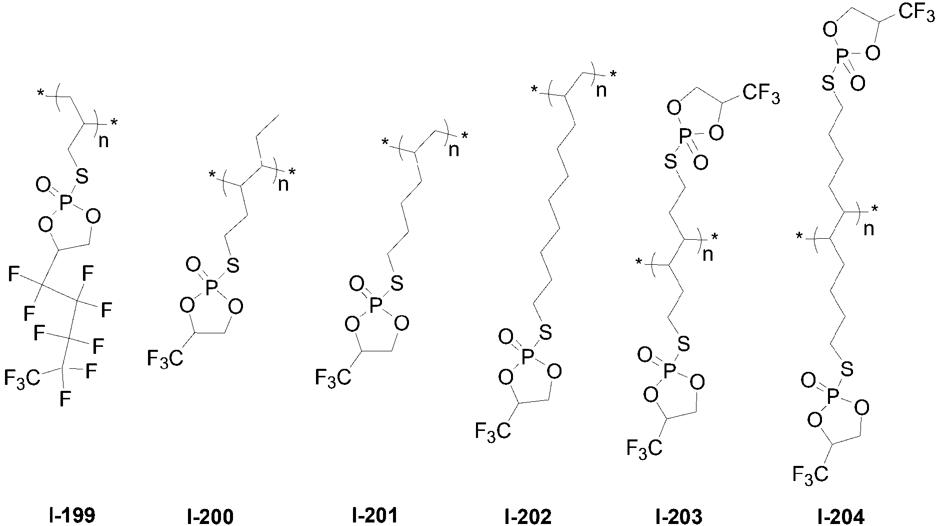

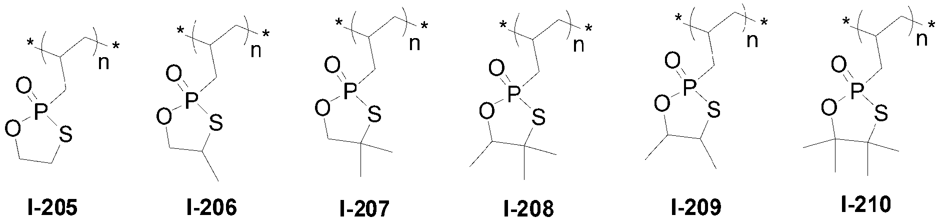

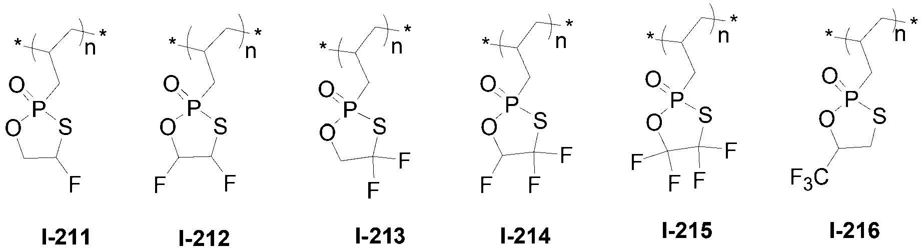

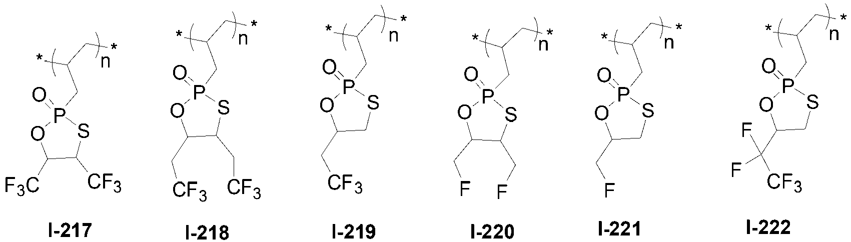

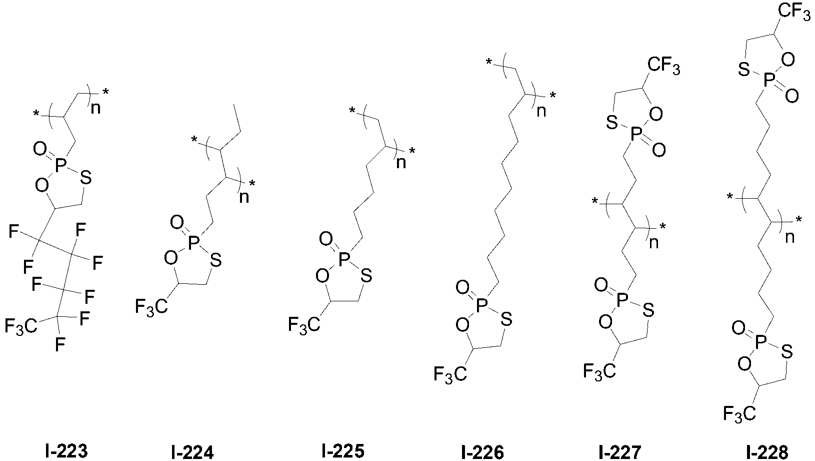

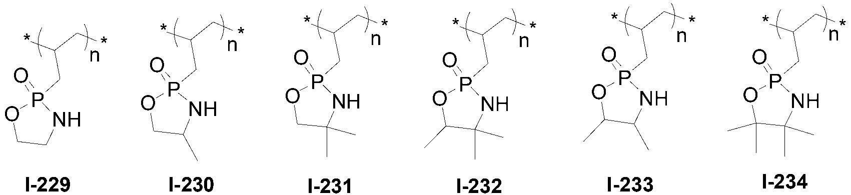

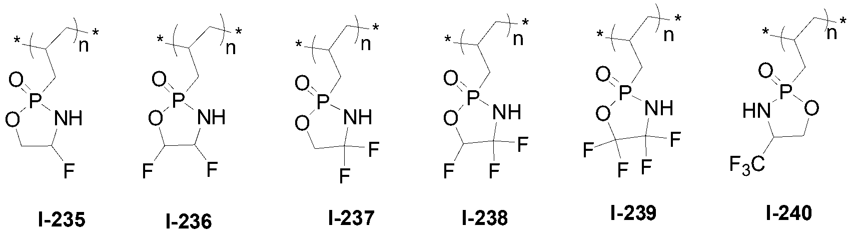

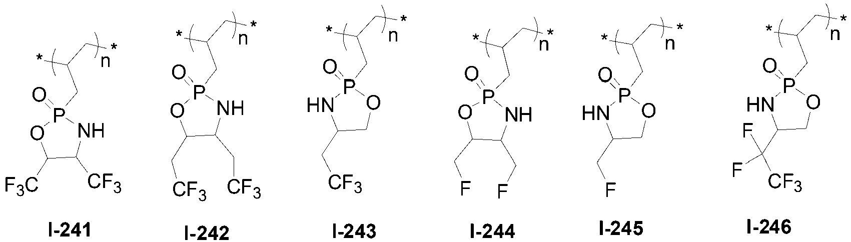

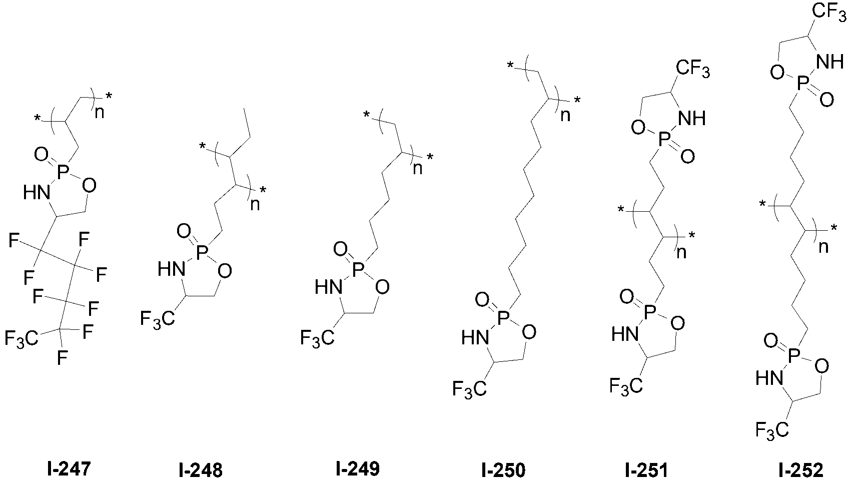

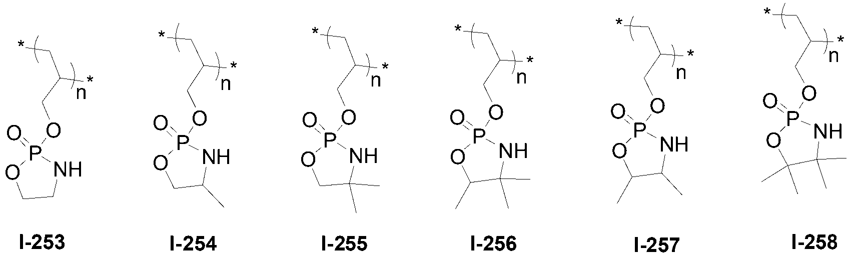

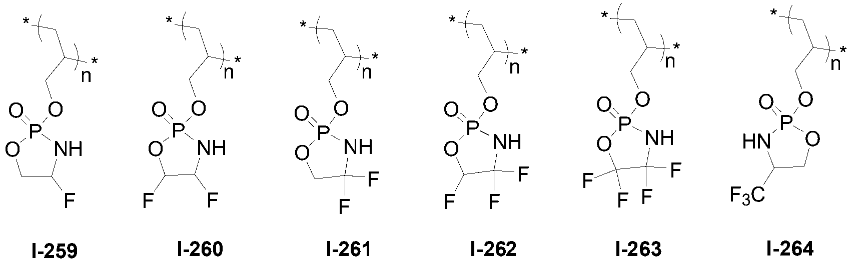

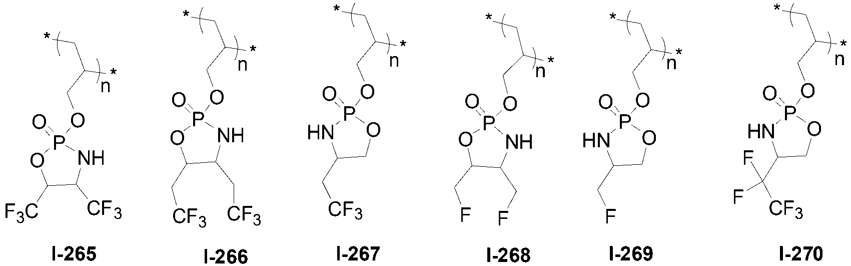

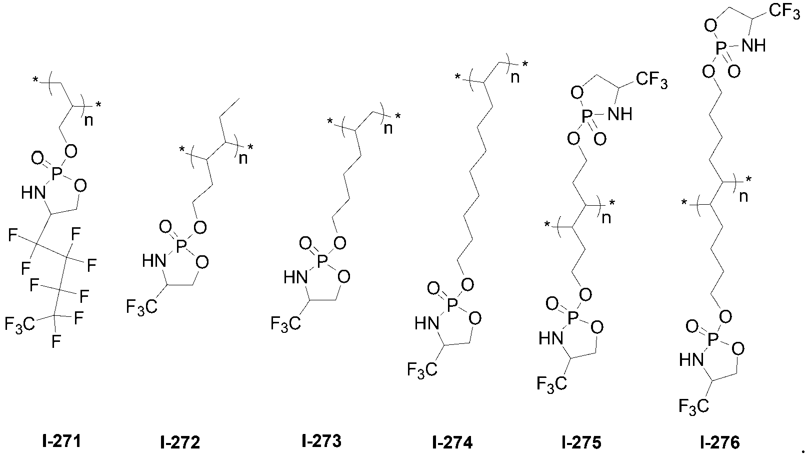

11. The polymer according to claim 7 or 9, wherein the polymerized monomer of the polymer further comprises a second polymerizable compound, and a general formula of the polymer is shown in formula II: 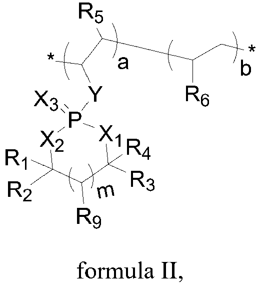
wherein a and b each are independently a positive integer, and 0.5≤a/b≤4;
R₆ is any one of C₃₋₁₀ alkyl unsubstituted or substituted with any group, a C₃₋₁₀ epoxy group unsubstituted or substituted with any group, C₃₋₁₀ allyl unsubstituted or substituted with any group, C₃₋₁₀ (methyl)acryloyl unsubstituted or substituted with any group, and C₃₋₁₀ acrylate unsubstituted or substituted with any group.

12. The polymer according to claim 11, wherein the second polymerizable compound comprises at least one of a polymerized monomer, an oligomer, and a copolymer of a gel polymer electrolyte.

13. The polymer according to claim 11 or 12, wherein the second polymerizable compound comprises at least one of methyl methacrylate, styrene, methyl acrylate, ethyl acrylate, acrylic acid, trimethylsilyl methacrylate, acrolein dimethyl acetal, acrolein diethyl acetal, 2-phenoxyethyl acrylate, 3-perfluorohexyl-2-hydroxypropyl acrylate, trifluoroethyl methacrylate, propenyl-1,3-sultone, glycidyl methacrylate, acrylamide, trifluoroethyl acrylate, (oxymethyl acrylate)dimethylmethoxysilane, cyanoethyl acrylate, hydroxyethyl acrylate, triallyl trimellitate, hydroxypropyl acrylate, 3-(perfluoro-3-methylbutyl) 2-hydroxypropyl acrylate, 1-vinyl-3-methylimidazolium bis (trifluoromethanesulfonyl)imide, 1-allyl-3-ethylimidazolium bis (trifluoromethanesulfonyl)imide, 1-allyl-1-methylpyrrolidinium bis (trifluoromethanesulfonyl)imide, 1,6-bis (acryloyloxy)-2,2,3,3,4,4,5,5-octafluorohexane, pentafluorophenol acrylate, vinylene carbonate, maleic anhydride, ethyl cyanoacrylate, butyl acrylate, hexafluoroisopropyl methacrylate, hexafluorobutyl methacrylate, 2-hydroxyl-3-phenoxypropyl 2-acrylate, hydroxyethyl methacrylate, and vinyl ethylene carbonate, optionally at least one of vinylene carbonate, maleic anhydride, ethyl cyanoacrylate, butyl acrylate, hexafluoroisopropyl methacrylate, hexafluorobutyl methacrylate, hydroxypropyl acrylate, 2-hydroxyl-3-phenoxypropyl 2-acrylate, hydroxyethyl methylacrylate, and vinyl ethylene acetate.

14. A method for preparing the polymer according to any one of claims 1-13, comprising:
self-polymerizing a cyclic phosphate compound having a double bond; and/or,
copolymerizing the cyclic phosphate compound having a double bond with the second polymerizable compound.

15. The method according to claim 14, wherein the method for preparing the cyclic phosphate compound having a double bond comprises:
enabling a cyclization reaction of 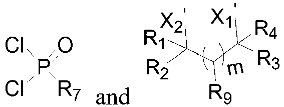 to obtain a compound with a general formula of 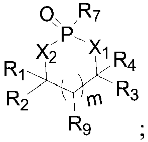 and/or
enabling a substitution reaction of 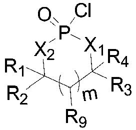 and Y'-R₈ to obtain a compound with a general formula of 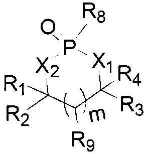 and/ or 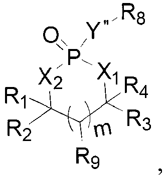 wherein:
m is 0 or 1; X₁' and X₂' each independently comprise hydroxyl, mercapto or amino; and X₁ and X₂ each independently comprise oxygen, sulfur or imino;
R₁, R₂, R₃, and R₄ each independently comprise any one of hydrogen, fluorine, C₁₋₁₀ alkyl unsubstituted or substituted with any group, and C₁₋₁₀ alkoxyl unsubstituted or substituted with any group; R₇ and R₈ each independently comprise C₂₋₁₁ olefin unsubstituted or substituted with any group; Y' comprises hydrogen, hydroxyl, mercapto or amino; Y" comprises oxygen, sulfur or imino, and R₉ comprises C₁₋₁₀ alkyl unsubstituted or substituted with any group; and the any group comprises at least one of halogen, alkyl and alkoxyl.

16. The method according to claim 15, wherein the 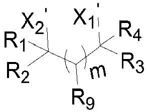 comprises at least one of ethylene glycol, ethanedithiol, 2-mercaptoethanol, mercaptoethylamine, ethanol amine, ethylene diamine, 1,3-propanediol, 1,3-propanedithiol, 3-mercapto-1-propanol, 3-amino-1-propanol, 3-mercapto-1-propylamine, 1,3-propanediamine.

17. The method according to claim 15 or 16, wherein the method for preparing the cyclic phosphate compound having a double bound further comprises:
performing a sulfurization reaction on 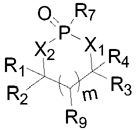 to obtain a compound with a general formula of 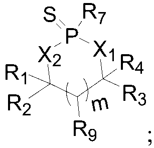 and/or
performing a sulfurization reaction on 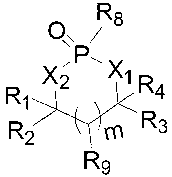 and/or 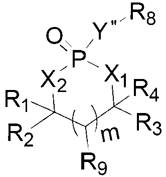 to obtain a compound with a general formula of 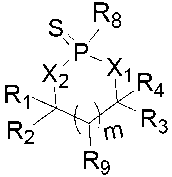 and/or

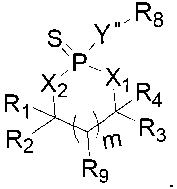

18. The method according to any one of claims 14-17, wherein the cyclic phosphate compound having a double bond comprises the polymerized monomer of at least one of a polymer 1-12, a polymer 1-49, a polymer I-84, a polymer 1-108, and a polymer I-192.

19. The method according to any one of claims 14-18, wherein the self-polymerization and/or the copolymerization is carried out under a condition of an initiator, and the initiator comprises at least one of azobisisobutyronitrile, azobisisoheptonitrile, 2,2"-azobis (2-imidazoline) dihydrochloride, 2,2'-azobisisobutylamidine dihydrochloride, benzoyl peroxide, t-butyl benzoyl peroxide, and methyl ethyl ketone peroxide.

20. A gel polymer electrolyte, comprising a polymer matrix and an electrolytic solution, wherein the polymer matrix comprises the polymer according to any one of claims 1-13 or a polymer obtained by the method according to any one of claims 14-19.

21. The gel polymer electrolyte according to claim 20, wherein a mass ratio of the polymer matrix is 0.5 wt%-25 wt%, optionally 5 wt%-15 wt%, and further optionally 5 wt%-12 wt%.

22. A battery, comprising the gel polymer electrolyte according to any one of claims 20-21, and/or a polymer prepared by using the method according to any one of claims 13-18, and/or the polymer according to any one of claims 1-12.

23. An electrical device, comprising the battery according to claim 22.
